(19) 

Europäisches Patentamt
European Patent Office
Office européen des brevets

(11) **EP 4 268 412 B1**

(12) **EUROPÄISCHE PATENTSCHRIFT**

(45) Veröffentlichungstag und Bekanntmachung des Hinweises auf die Patenterteilung:
**03.12.2025 Patentblatt 2025/49**

(21) Anmeldenummer: **22800242.4**

(22) Anmeldetag: **07.10.2022**

(51) Internationale Patentklassifikation (IPC):
**H04L 9/06** *(2006.01)* **H04L 9/14** *(2006.01)*

(52) Gemeinsame Patentklassifikation (CPC):
**H04L 9/0637; H04L 9/14**

(86) Internationale Anmeldenummer:
**PCT/EP2022/077966**

(87) Internationale Veröffentlichungsnummer:
**WO 2023/066689 (27.04.2023 Gazette 2023/17)**

(54) **VERFAHREN ZUR VERSCHLÜSSELUNG EINES KLARTEXTES**

METHOD FOR ENCRYPTING PLAIN TEXT

PROCÉDÉ DE CRYPTAGE DE TEXTE EN CLAIR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **19.10.2021 DE 102021005213**

(43) Veröffentlichungstag der Anmeldung:
**01.11.2023 Patentblatt 2023/44**

(73) Patentinhaber: **Mercedes-Benz Group AG 70372 Stuttgart (DE)**

(72) Erfinder: **FRIESEN, Viktor 76139 Karlsruhe (DE)**

(74) Vertreter: **Novagraaf Group Chemin de l'Echo 3 1213 Onex / Geneva (CH)**

(56) Entgegenhaltungen:
**US-A1- 2014 013 123 US-A1- 2015 349 950 US-A1- 2019 356 468**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Verschlüsselung eines Klartextes mit einer Blockchiffre E der Blockgröße $L_E$ unter Verwendung eines symmetrischen Schlüssels K.

Aus der US 2019/356468 A1 ist ein Verfahren bekannt, um einen Klartext mit einer Blockchiffre einer vorgegebenen Länge unter Verwendung eines symmetrischen Schlüssels zu verschlüsseln. Hierbei wird ein Initialisierungsvektor verwendet, sodass ein einen Initialisierungsvektor verlangender Betriebsmodus zum Einsatz kommen kann.

Die US 2014/0013123 A1 beschreibt einen Schaltkreis für sichere Operationen mit einer Verschlüsselung mit verschiedenen Bereichen, welche unterschiedliche Sicherheitslevel vorweisen.

Zum weiteren Stand der Technik kann ferner auf die US 2015/03499950 A1 verwiesen werden.

Das hochfrequente Versenden und Empfangen kurzer Nachrichten ist bei manchen Anwendungen innerhalb eines Fahrzeug-Ökosystems von großer Bedeutung, Beispiele hierfür finden sich bspw. in der DE 10 2021 001 095 A1. Es ist dabei, wie in dieser Schrift dargestellt, oft unerlässlich, diese Nachrichten mit einem kryptographischen Integritätsschutz und/oder einem kryptographischen Replay-Schutz zu versehen, ohne dabei die Länge der Nachrichten zu stark zu erhöhen, wobei, wie in der genannten Veröffentlichungsschrift dargestellt, für diesen Zweck aus Effizienzgründen ausschließlich symmetrische Verfahren in Frage kommen können. In manchen Fällen kann es jedoch wichtig sein, die gesamte Nachricht oder zumindest einen Teil davon, bspw. die Nutzdaten, zu verschlüsseln, um bspw. vertrauliche Nutzdaten zu schützen und/oder einem potentiellen Angreifer das Mitlesen, Interpretieren und damit das Reverse Engineering der Nachrichten und des genutzten Protokolls zu erschweren.

Ähnliche wie die für den Integritäts- und den Replay-Schutz in der DE 10 2021 001 095 A1 angestellten Überlegungen gelten auch für die Verschlüsselung. Prinzipiell könnten insbesondere kurze Nachrichten asymmetrisch, bspw. mit auf RSA basierenden Verfahren, verschlüsselt werden. Der RSA-Chiffretext eines Klartextes ist jedoch mindestens so lang wie der zur Verschlüsselung verwendete Schlüssel, also bspw. 2048 Bit bei der Verwendung von RSA-2048. Damit wird aus einer bspw. 20 Byte, also 160 Bit langen unverschlüsselten Nachricht eine mindestens 2048 Bit lange verschlüsselte zu übertragende Nachricht, was der Notwenigkeit der Verwendung kurzer Nachrichten vollständig zuwiderläuft. Außerdem benötigt asymmetrische Entschlüsselung ein Vielfaches an Zeit im Vergleich zur symmetrischen Ver- oder Entschlüsselung. Damit kommen für eine effiziente Verschlüsselung kurzer hochfrequenter Nachrichten nur symmetrische Verfahren in Frage.

Zur symmetrischen Verschlüsselung werden heute meist Blockchiffren wie bspw. AES eingesetzt. Die Blockgröße einer Blockchiffre E wird hier mit $L_E$ oder L_E bezeichnet. Bei der Raw-Verschlüsselung mit einer Blockchiffre E der Blockgröße $L_E$ wird ein genau $L_E$ Bit langer Klartext, ein sog. Klartextblock, mit Hilfe eines symmetrischen Schlüssels zu einem genau $L_E$ Bit langen Chiffretext, einem sog. Chiffretextblock, verschlüsselt. Entsprechend wird bei der Raw-Entschlüsselung mit einer zu einer Blockchiffre E der Blockgröße $L_E$ gehörenden Entschlüsselungsfunktion D ein (genau $L_E$ Bit langer) Chiffretextblock mit Hilfe eines symmetrischen Schlüssels zu einem (genau $L_E$ Bit langen) Klartextblock entschlüsselt. In beiden Fällen wird also immer genau ein kompletter Block verarbeitet, Eingaben mit abweichenden Längen werden nicht akzeptiert. Die E-Raw-Verschlüsselung bzw. die D-Raw-Entschlüsselung wird hier mit $E^{RAW}$ bzw. $D^{RAW}$ bezeichnet. Die E-Raw-Verschlüsselung mit einem symmetrischen Schlüssel K wird mit $E^{RAW}_K$ und die D-Raw-Entschlüsselung mit einem symmetrischen Schlüssel K wird mit $D^{RAW}_K$ bezeichnet.

Bei einer Verschlüsselung mit einer Blockchiffre E wird ein Klartext, der länger als $L_E$ Bit ist, in der Chiffre-Blockgröße $L_E$ entsprechende Blöcke eingeteilt, die dann einzeln mit Hilfe eines symmetrischen Schlüssels verschlüsselt werden. Die voneinander vollständig unabhängige Verschlüsselung der einzelnen Klartextblöcke wird ECB-Modus (einer Blockchiffre) genannt. Im Unterschied zur Raw-Verschlüsselung kann eine im ECB-Modus betriebene Chiffre mit Eingaben beliebiger Längen umgehen. Ist dabei der letzte Klartextblock kürzer als die Blockgröße der Blockchiffre, wird ein sog. Padding angewendet, das diesen letzten Klartextblock auf eine definierte Weise auffüllt. ECB ist der einfachste Betriebsmodus für eine Blockchiffre, er hat jedoch den Nachteil, dass dabei bei der Verwendung desselben Schlüssels gleiche Klartextblöcke zu gleichen Chiffretextblöcken verschlüsselt werden, wodurch ein Angreifer Rückschlüsse in Bezug auf die korrespondierenden Klartextblöcke ziehen könnte.

Als Abhilfe gegen diese ECB-Schwäche sind komplexere Betriebsmodi (CBC, CFB, OFB, CTR, etc.), entwickelt worden, bei denen statt der voneinander unabhängigen direkten Verschlüsselungen der einzelnen Klartextblöcke, wie beim ECB-Modus, die Verschlüsselungen der einzelnen Klartextblöcke miteinander mehr oder weniger eng verwoben werden, so dass in die Verschlüsselung eines nächsten Klartextblocks zusätzlich zum Klartextblock selbst und zum Schlüssel, weitere während der Verschlüsselung seines Vorgängerblockes erzeugte i.d.R. eine Blockgröße lange Daten eingehen, wobei diese in die Verschlüsselung des nächsten Klartextblocks eingehenden Daten vom Vorgänger-Klartextblock abhängen können (CBC, CFB) oder davon unabhängig sein können (OFB, CTR).

Auf diese Weise werden, grob gesagt, i.d.R. gleiche Klartextblöcke zu verschiedenen Chiffretextblöcken verschlüsselt, was jedoch nicht für den ersten Klartextblock gilt, da dieser keinen Vorgängerblock hat, von dem er die zusätzlichen Eingabedaten erhalten könnte. Um dem abzuhelfen, werden i.d.R. eine Blockgröße lange Initialisierungsvektoren, die als diese zusätzlichen Daten bei der Verschlüsselung des ersten Blocks genutzt werden, verwendet. Dabei darf ein Initialisierungsvektor jeweils nur einmal, also nur für einen Klartext, verwendet werden, ansonsten werden (bei gleichem Schlüssel) wiederum für gleiche Klartextblöcke gleiche Chiffretextblöcke erzeugt, ein Initialisierungsvektor muss also während der Verwendung desselben Schlüssels eine Nonce sein. Dabei muss ein Initialisierungsvektor nur neuartig, also eine Nonce, sein, er muss nicht geheim gehalten werden. Vielmehr wird der für die Verschlüsselung verwendete Initialisierungsvektor bei der Entschlüsselung ebenfalls benötigt, der Initialisierungsvektor muss also sowohl dem Sender als auch dem Empfänger bekannt sein. Da er nicht geheim gehalten werden muss, kann er bspw. auch als expliziter unverschlüsselter Teil der Nachricht übertragen werden, was bspw. bei TLS gemacht wird. Ist das der Fall, so darf er nicht verschlüsselt übertragen werden, denn ohne den als Klartextblock vorliegenden Initialisierungsvektor kann der Empfänger die verschlüsselte Nachricht nicht entschlüsseln.

Die explizite Übertragung des Initialisierungsvektors insb. als Teil kurzer Nachrichten ist jedoch ressourcenintensiv, da ein Initialisierungsvektor i.d.R. einen Block lang ist, bspw. 128 Bit bei AES. Wenn vorab bekannt ist, wie viele Nachrichten maximal mit demselben Schlüssel verschlüsselt werden, so kann auf Seiten des Senders ein Zähler geführt werden, der bei jeder neuen Nachricht um eins inkrementiert wird. Aus diesem Zähler kann dann, bspw. durch ein geeignetes zwischen dem Sender und dem Empfänger abgestimmtes Paddingverfahren, mit dessen Hilfe die Zählerbits durch weitere Bits ergänzt werden oder mit Hilfe einer kryptographischen Hashfunktion gefolgt von einer ggf. notwendigen Längenanpassung, vom Sender für jede neue Nachricht ein wegen der zuvor stattgefundenen Inkrementierung des Zählers neuer, i.d.R. einen Block langer Initialisierungsvektor erzeugt und für die Verschlüsselung der Nachricht verwendet werden. Anstatt den gesamten Initialisierungsvektor mit jeder Nachricht mitzuschicken, wird dann nur der Zähler, also die den Zähler repräsentierenden Zählerbits, die die Nummer der jeweiligen Nachricht repräsentieren, mitgeschickt. Dadurch kann der in der Nachricht benötigte Platz von bspw. 128 Bit auf bspw. 32 Bit, bei einem 32 Bit langen Zähler, reduziert werden.

Besonders platzsparend wäre es, einen impliziten geteilten Initialisierungsvektor zu verwenden, indem der Sender und der Empfänger zu Beginn einen gemeinsamen Start-Initialisierungsvektor und eine Vorschrift zur Generierung eines neuartigen nächsten Initialisierungsvektors aus dem aktuellen Initialisierungsvektor vereinbaren und diesen nächsten neuartigen Initialisierungsvektor dann synchron für jede neue Nachricht auf beiden Seiten mit Hilfe der zuvor vereinbarten Vorschrift generieren. Das Problem hierbei ist, dass Nachrichten verlorengehen oder in der falschen Reihenfolge ankommen können, wodurch die Synchronität der vom Sender und vom Empfänger geführten Initialisierungsvektoren verlorengeht.

Eine andere ebenso platzsparende Art, einen Initialisierungsvektor zwischen Sender und Empfänger implizit zu synchronisieren, wäre es, diesen aus der Nachricht selbst, die sowieso übertragen werden muss, auf eine sichere Weise abzuleiten, was der Sender und der Empfänger unabhängig voneinander machen könnten. Das Problem hierbei ist, dass der Initialisierungsvektor auf der einen Seite dem Sender vor dem Verschlüsselungsvorgang bekannt und damit aus der Klartextnachricht ableitbar sein muss, auf der anderen Seite jedoch dem Empfänger vor dem Entschlüsselungsvorgang bekannt und damit aus der verschlüsselten Nachricht ableitbar sein muss, was eine (auf den ersten Blick) widersprüchliche Forderung ist.

Sogenannte synthetische Initialisierungsvektoren (SIV) die bei speziellen AEAD-Verfahren ("Authenticated Encryption with Associated Data"), also Verfahren, die sowohl eine Verschlüsselung als auch eine Authentifizierung ermöglichen, eingesetzt werden, zeichnen sich dadurch aus, dass sie den für die Verschlüsselung verwendeten Initialisierungsvektor aus der Nachricht selbst generieren, indem aus der Nachricht ein eindeutiger Authentifizierungsstempel (Tag) erzeugt wird, der dann bei der Verschlüsselung der Nachricht oder Teilen davon als Initialisierungsvektor verwendet wird. Es sind für verschiedene AEAD-Betriebsmodi auf synthetischen Initialisierungsvektoren basierende AEAD-Varianten entwickelt worden, bspw. für eine Kombination aus CMAC und CTR (SIV-AES), für AES-GCM (AES-GCM-SIV) oder für CCM (CCM-SIV) (vgl. auch DE 10 2019 113 026 A1). Da der Initialisierungsvektor, also der aus der unverschlüsselten Nachricht erzeugte Authentifizierungsstempel, jedoch bei der Entschlüsselung der Nachricht auch benötigt wird, er aber vom Empfänger aus der verschlüsselten Nachricht nicht unmittelbar abgeleitet werden kann, muss er zusammen mit der verschlüsselten Nachricht dem Empfänger unverschlüsselt zugeschickt werden, wodurch durch die Verwendung eines synthetischen Initialisierungsvektors nach den oben erwähnten Verfahren kein Platz in der Nachricht eingespart wird.

In diesem Zusammenhang kann prinzipiell auf die US 2015/0349950 A1 hingewiesen werden.

In der WO 2009/013420 A1 wird ein auf Blockchiffren basierendes CBC-MAC-ähnliches Authentifizierungsverfahren definiert, das den Message Authentication Code (MAC) statt, wie bspw. bei CBC-MAC, nur über die Nachricht selbst, über die um einen den Hashwert der Nachricht enthaltenden Präfix erweiterte Nachricht berechnet.

Wie oben erwähnt, ist die zentrale Schwäche des ECB-Modus die Tatsache, dass bei der Verwendung des gleichen Schlüssels gleicher Klartext zu gleichem Chiffretext verschlüsselt wird. Da das Problem nur im Kontext der Verwendung des gleichen Schlüssels existiert und bei einem Schlüsselwechsel gewissermaßen ein Zurücksetzen des Problems stattfindet, wird für den Rest des Dokuments ein fester geteilter symmetrischer Schlüssel K angenommen.

Die allgemein verbreitete Forderung, dass für die Verschlüsselung jedes neuen Klartextes ein neuartiger Initialisierungsvektor genutzt werden soll, ist für die Behebung der oben geschilderten Schwäche hinreichend aber nicht unbedingt notwendig. Kann nämlich sichergestellt werden, dass der erste Block eines Klartextes immer neuartig ist, so kann auf die Forderung der Nutzung eines neuartigen Initialisierungsvektors bei den Betriebsmodi, die bei der Verkettung der Blöcke den vorhergehenden Block, insb. den vorhergehenden Chiffretextblock, miteinbeziehen (bspw. CBC, CFB), verzichtet werden. Es genügt also in bestimmten Fällen, dass für einen festen Schlüssel die Kombination aus dem Initialisierungsvektor und dem ersten Klartextblock neuartig ist. Sind die ersten Klartextblöcke immer neuartig, so kann in diesen bestimmten Fällen auf die Verwendung eines Initialisierungsvektors sogar ganz verzichtet werden.

Will oder muss man bspw. aus Platzgründen auf einen garantiert neuartigen (expliziten oder impliziten) Initialisierungsvektor für jeden zu verschlüsselnden Klartext verzichten, so ist es sinnvoll, das Format der Klartexte so zu gestalten, dass die Wahrscheinlichkeit, dass der erste Block eines Klartextes immer neuartig ist, maximiert wird.

Weil die Wahrscheinlichkeit, dass die einzelnen Klartexte "neuartig", also paarweise verschieden, sind, größer ist, als die Wahrscheinlichkeit, dass die ersten Blöcke der jeweiligen Klartexte neuartig, also paarweise verschieden, sind, macht es Sinn, um mit größtmöglicher Wahrscheinlichkeit neuartige erste Blöcke zu erreichen, die "Neuartigkeit" des gesamten Klartextes im ersten Block zu sammeln, also die ersten Blöcke der jeweiligen Klartexte so zu gestalten, dass die ersten Blöcke von zwei unterschiedlichen Klartexten sich ebenfalls immer unterscheiden.

Nun können Unterschiede zwischen zwei Klartexten je nach Klartext-Paar an verschiedenen Stellen der Klartexte auftreten, die "Neuartigkeit" kann also über die gesamten Klartext-Bitpositionen verteilt sein. Somit lässt sich durch einfaches Umsortieren der jeweiligen Klartext-Bits im allgemeinen Fall kein Klartextformat finden, das maximal wahrscheinliche neuartige erste Klartextblöcke garantiert. Die in den Klartexten enthaltene "Neuartigkeit" lässt sich jedoch sehr gut durch die Anwendung einer kryptographischen Hashfunktion HASH auf eine Folge bestimmter ausgewählter Bits, für die eine Möglichkeit besteht, dass ihre Kombination neuartig ist, akkumulieren. Tritt dabei bei zwei zu zwei verschiedenen Klartexten gehörenden zur Bildung des Hashwertes herangezogenen Bitfolgen BF1 und BF2 ein Unterschied in mindestens einem der Bits auf, so unterscheiden sich mit sehr hoher Wahrscheinlichkeit auch die Hashwerte HashTag1 := HASH(BF1) und HashTag2 := HASH(BF2) der beiden dieses unterschiedliche Bit enthaltenden Bitfolgen.

Der so errechnete Hashwert HashTag := HASH(BF) ließe sich nun direkt als Initialisierungsvektor verwenden oder es ließe sich daraus ein Initialisierungsvektor ableiten, der immer dann neuartig wäre, wenn die in die Berechnung des Hashwertes eingehende Klartext-Bitfolge BF es wäre. Auf diese Weise wird bspw. bei den oben beschriebenen synthetischen Initialisierungsvektoren (SIV) vorgegangen. Das Problem dabei ist, wie oben bereits erklärt, dass der Initialisierungsvektor dem Empfänger bekannt sein muss, damit er den ganz oder teilweise verschlüsselten Klartext entschlüsseln kann. Will man den Initialisierungsvektor nicht explizit als Teil des Klartextes unverschlüsselt übertragen, was aus Gründen der Platzsparsamkeit nicht erwünscht ist, hieße das, dass kein Teil der Bitfolge BF, die zur Bildung des Hashwertes HashTag herangezogen wird, verschlüsselt werden darf, da andernfalls der Empfänger den vom Sender bei der Verschlüsselung verwendeten Initialisierungsvektor aus dem empfangenen tlw. oder vollständig verschlüsselten Klartext nicht herleiten kann.

Die Aufgabe der hier vorliegenden Erfindung besteht nun darin, ein verbessertes Verfahren zur Verschlüsselung eines Klartextes mit einer Blockchiffre unter Verwendung eines symmetrischen Schlüssels K anzugeben sowie die hierfür benötigten Mechanismen bereitzustellen.

Erfindungsgemäß wird diese Aufgabe durch die Merkmale im Anspruch 1 gelöst. Vorteilhafte Ausgestaltungen ergeben sich aus den hiervon abhängigen Unteransprüchen. Die Aufgabe wird ferner durch die Merkmale im Anspruch 12 gelöst. Auch hier ergeben sich vorteilhafte Weiterbildungen aus den hiervon abhängigen Unteransprüchen.

Zuerst wird also ein Weg benötigt, die gesamte Neuartigkeit eines Klartextes im ersten Block des Klartextes zu kodieren, so dass eine beliebige Änderung im gesamten Klartext inklusive des ersten Blocks sich als eine Änderung des ersten Klartextblocks auswirkt. Das erfindungsgemäße Verfahren zur Verschlüsselung eines, vorzugsweise mindestens (u+1) Bit langen, Klartextes mit einer Blockchiffre E der Blockgröße $L_E$ unter Verwendung eines symmetrischen Schlüssels K gemäß der Erfindung nutzt das Ergebnis der Anwendung einer Fingerprint-Funktion ($FP_u$) auf die Konkatenation der kompletten ersten u Bits des Klartextes und ausgewählter oder aller Bits des restlichen Klartextes als Ersatz für die Kombination eines Initialisierungsvektors und der ersten u Bits des Klartextes. Die Fingerprint-Funktion muss dabei lediglich den beiden Forderungen genügen, dass aus zwei ungleichen Bitfolgen (BF1 ≠ BF2) mit einer für die Anwendung ausreichend hohen Wahrscheinlichkeit - im oben definierten Sinn - folgt, dass auch die Fingerprints der beiden Bitfolgen ungleich sind ($FP_u(BF1) \neq FP_u(BF2)$), und dass zu der Fingerprint-Funktion ($FP_u$) eine Fingerprint-Umkehrfunktion ($FP_u^{-1}$) existiert, so dass stets gilt: $FP_u^{-1}(FP_u(BF) \| BF[u+1..L(BF)]) = BF[1..u]$.

Dabei müssen u und $L_E$ nicht zwingend gleich sein. Für die Verschlüsselung der ersten u Bits $PB^u_1$ des Klartextes wird eine allgemeine keinen Initialisierungsvektor verlangende Chiffre EGen verwendet, indem $FP_u$, wie beschrieben, auf die Konkatenation der kompletten ersten u Bits $PB^u_1$ des Klartextes und ausgewählter oder aller Bits FPInput des restlichen Klartextes angewendet wird und anschließend der erste Block des Chiffretextes $CB_1$ durch EGen-Verschlüsselung des u Bit langen Ergebnisses $FP_u(PB^u_1 \| FPInput)$ berechnet wird. Das Zeichen || stellt dabei die Konkatenation zweier Bitfolgen dar. Es ergibt sich dann also
$CB_1$ := EGen(FP($PB^u_1 \| FPInput$)). Dabei ist es prinzipiell nicht notwendig, dass EGen längenerhaltend ist, dass $CB_1$ also auch u Bit lang ist, auch wenn es das in der Praxis wohl meist sein wird.

Die so erzeugte Verschlüsselung der ersten u Bits des Klartextes $CB_1$ kann somit als Initialisierungsvektor IV :=

$CB_1$ für die Verschlüsselung von Teilen des oder des ganzen restlichen Klartextes mit der Blockchiffre E verwendet werden, wozu ein beliebiger einen Initialisierungsvektor (IV) verlangender Betriebsmodus genutzt werden kann.

Durch Anwendung einer Fingerprint-Funktion $FP_u$ vor der Verschlüsselung mit EGen kann in vorteilhafter Weise sichergestellt werden, dass neuartige Klartexte mit einer sehr hohen Wahrscheinlichkeit auch zu neuartigen Eingaben für die Chiffre EGen führen, was wiederum mit einer sehr hohen Wahrscheinlichkeit zu einem neuartigen Chiffretext $CB_1$ und damit zu einem neuartigen Initialisierungsvektor IV führt. Beispielsweise werden im Falle der Verwendung der Fingerprint-Funktion $FP^{Tag\_u, Scramble\_u}$ als $FP_u$ in die Berechnung des pseudozufälligen $CB_1$ sowohl die ersten u Bits des Klartextes $PB^u_1$ (über $Scramble_u$) als auch der Rest des Klartextes (über $Tag_u$) gleichermaßen einbezogen, damit ist mit einer sehr hohen Wahrscheinlichkeit sichergestellt, dass der aus den mittels $FP^{Tag\_u, Scramble\_u}$ und EGen verschlüsselten ersten u Bits $CB_1$ abgeleitete Initialisierungsvektor IV neuartig ist, wenn der gesamte Ausgangsklartext es auch ist.

Gemäß einer sehr vorteilhaften Ausgestaltung der erfindungsgemäßen Lösung sieht zum Erzeugen eines u Bit langen Fingerprints einer Bitfolge BF deren Länge größer als u ist, vor, dass der Fingerprint als Ergebnis der Funktion $FP_u$ (BF) bzw. $FP^{Tag\_u, Scramble\_u}$(BF) realisiert wird, wobei diese als $Scramble_u$ (BF[1..u]) $\oplus$ $Tag_u$(BF[u + 1..L(BF)]) definiert wird, wobei $Tag_u$ eine Funktion ist, die zu Bitfolgen (BF) beliebiger Länge einen mit für die Anwendung ausreichend hoher Wahrscheinlichkeit eindeutigen bspw. einen pseudozufälligen Wert der Länge u berechnet, wobei $Scramble_u$ eine umkehrbare Funktion ist, die Bitfolgen (BF) der Länge u auf Bitfolgen (BF) der Länge u abbildet, und wobei $\oplus$ für eine bitweise XOR-Verknüpfung zweier Bitfolgen (BF) mit gleicher Länge steht.

Um die Neuartigkeit eines gesamten Klartextes in den ersten u Bits des Klartextes zu kodieren und diese Tatsache für die Verschlüsselung nutzen zu können, wird also für eine natürliche Zahl u > 0 eine Funktion $FP_u$ ("Fingerprint") gesucht, die für eine Bitfolge BF mit L(BF) > u (L(BF) bezeichnet in diesem Dokument die Bitlänge einer Bitfolge BF) eine Bitfolge $FP_u$(BF) der Länge u derart bestimmt, dass

- aus BF1 $\neq$ BF2 mit einer mit für die Anwendung ausreichend hoher Wahrscheinlichkeit $FP_u$(BF1) $\neq$ $FP_u$(BF2) folgt,
- zu $FP_u$ eine FP-Umkehrfunktion $FP_u^{-1}$ existiert, so dass stets

$$FP_u^{-1}(FP_u (BF) \| BF[u+1..L(BF)]) = BF[1..u]$$

gilt,

wobei für eine Bitfolge BF und natürliche Zahlen i, j mit $1 \leq i \leq j \leq L(BF)$ BF[i..j] die aus den Bits i bis j bestehende Teilfolge von BF bezeichnet, also bspw.
BF = BF[1..L(BF)] gilt, und $\|$ die Konkatenation zweier Bit- oder Bytefolgen bezeichnet.

Unter der "mit für die Anwendung ausreichend hohen Wahrscheinlichkeit" ist dabei eine Wahrscheinlichkeit zu verstehen, welche basierend unter anderem auf der Größe von u für den vorgegebenen Anwendungsfall für zwei Bitfolgen BF1, BF2 mit BF1 $\neq$ BF2 ausreichend sicher zu dem Ergebnis $FP_u$(BF1) $\neq$ $FP_u$(BF2) führt. Ein exakter Wert ist hierbei prinzipbedingt nicht angebbar, da es bei der Funktion Tag ja um die Abbildung einer (u+x)-langen Bitfolge BF auf eine u-lange Bitfolge geht, so dass bei zwei verschiedenen Bitflogen BF1, BF2 ihre Tags "so gut es geht" verschieden sind, also "nach Möglichkeit" aus BF1 $\neq$ BF2 folgt Tag(BF1) $\neq$ Tag(BF2).

Es existiert in der Praxis jedoch keine solche Funktion Tag, die dies für alle BF1, BF2 mit 100% sicherstellt, da Tag(BF) immer u Bit lang und damit kürzer als "die meisten" Bitfolgen BF ist. Wählt man bspw. u = 2, so gibt es nur vier verschiedene Tags: 00, 01, 10, 11. Damit hätten wir schon bei fünf beliebigen verschiedenen Bitfolgen BF1 .. BF5 mit 100% Wahrscheinlichkeit mindestens eine Kollision, also eine Doppelung von mind. zwei der fünf Tags Tag(BF1) ... Tag(BF5). Des Weiteren läge bei u = 2 und bei zwei zufällig ausgewählten Bitfolgen BF1, BF2 die Wahrscheinlichkeit für eine Kollision, also für Tag(BF1) = Tag(BF2), bei mindestens 25%. Damit ist die "Güte" (also die Qualität oder die Wahrscheinlichkeit für (BF1 $\neq$ BF2 $\Rightarrow$ Tag(BF1) $\neq$ Tag(BF2)) einer Funktion $Tag_u$ höchstens so gut wie die Größe von u.

Auf der anderen Seite gibt es kollisionsresistente kryptographische Hashfunktionen, die, als $Tag_u$ verwendet und ein ausreichend großes u vorausgesetzt, diese gewünschte Eigenschaft (BF1 $\neq$ BF2 $\Rightarrow$ Tag(BF1) $\neq$ Tag(BF2)) mit "nahezu 100%" sicherstellen. Allerdings können sie es auch nicht zu 100% sicherstellen, vgl. obige Überlegungen. Die Wahrscheinlichkeit, dass im Falle der Verwendung kollisionsresistenter kryptographischer Hashfunktionen als Tag (BF1 $\neq$ BF2 $\Rightarrow$ Tag(BF1) $\neq$ Tag(BF2)) gilt, wird aber als so groß angesehen, dass darauf die Sicherheit vieler als sicher angesehener kryptographischer Mechanismen beruht. Das Prinzip mit der angesprochenen Wahrscheinlichkeit liegt z. B. auch juristisch belastbaren digitale Signaturen usw. zugrunde.

Nun kann es sein, dass eine Hashfunktion einen Wert (Hashtag) von bspw. 256 Bit, wie es bspw. SHA-256 tut, liefert. Die Funktion Tag gemäß der Erfindung aber einen Wert von u=20 nutzen will. Dann könnte man als Tag die ersten 20 Bits des von SHA-256 gelieferten Hashtags verwenden. Damit hätten wir eine von SHA-256 gelieferte bei "fast 100%" liegende Güte, die dann aber durch die Nutzung von u=20 doch stark reduziert wird. Eine sinnvolle Wahl von u und auch von der Funktion Tag hängt nun vom jeweiligen Einzel- bzw. Einsatzfall ab. Wählt man bspw. u = 128 und als Tag die ersten 128 Bits des von SHA-256 gelieferten Wertes, so gilt man nach den heutigen Erkenntnissen als "auf der sicheren Seite" für alle Anwendungen. Es kann jedoch durchaus Fälle geben, in denen bspw. u=80 Bit in der Praxis für eine bestimmte Anwendung auch absolut ausreichend ist und damit bei $BF1 \neq BF2$ eine für die Anwendung ausreichend hohe Wahrscheinlichkeit für $FP_u(BF1) \neq FP_u(BF2)$ gewährleistet. Müsste man den Wert der Wahrscheinlichkeit beziffern, so würde man in der Praxis in so gut wie allen Fällen sicherlich ein u >= 80 wählen und dadurch mit geeignetem Tag eine Wahrscheinlichkeit von weit über $(1 - 2^{-20})$ erreichen.

Ion dieser vorteilhaften Ausgestaltung der erfindungsgemäßen Lösung wird dabei vorgeschlagen, für eine Funktion $FP_u$ die allgemeine Form

$$FP_u(BF) \text{ bzw. } FP^{Tag\_u, Scramble\_u} := \quad Scramble_u(BF[1..u]) \oplus Tag_u(BF[u + 1..L(BF)])$$

zu verwenden, wobei

-   $Tag_u$ eine Funktion ist, die zu Bitfolgen beliebiger Längen einen mit für die Anwendung ausreichend hoher Wahrscheinlichkeit eindeutigen bspw. pseudozufälligen Wert der Länge u berechnet, beispielsweise eine kryptographische Hashfunktion, deren Hashwert bei Bedarf auf die Länge u auf sichere Weise angepasst wird, also indem bspw. im Falle eines zu langen Hashwertes dessen letzte u Bits als $Tag_u(BF)$ genutzt werden oder im Falle eines zu kurzen Hashwerts dieser bspw. mit Hilfe eines kryptographischen Schlüsselstreckung-Verfahrens auf die Länge u gestreckt wird.

    o Durch eine geeignete Wahl von $Tag_u$ können die schwach-schwache und die schwach-starke FP-Kollisionsresistenzen erreicht sowie die Nicht-Umkehrbarkeit, die stark-schwache FP-Kollisionsresistenz und die stark-starke FP-Kollisionsresistenz möglich gemacht werden, wie es später noch erläutert ist.

-   $Scramble_u$ eine umkehrbare Funktion ist, die Bitfolgen der Länge u auf Bitfolgen der Länge u abbildet, beispielsweise eine längenerhaltende Verschlüsselung (mit der dazugehörigen Entschlüsselung als Umkehrfunktion),

    o Durch eine geeignete Wahl von $Scramble_u$ können bei gleichzeitiger geeigneter Wahl der $Tag_u$-Funktion die, wie später noch erläutert, nur auf den Angreifer bezogenen Eigenschaften der Nicht-Umkehrbarkeit, der stark-schwachen FP-Kollisionsresistenz und der stark-starken FP-Kollisionsresistenz erreicht werden.

-   $\oplus$ die bitweise XOR-Verknüpfung zweier gleichlanger Bitfolgen bezeichnet.

Die FP-Umkehrfunktion von $FP^{tag\_u, Scramble\_u}$ ist dann gegeben durch $(FP^{Tag\_u, Scramble\_u})^{-1}(BF) = Scramble_u^{-1}(BF[1..u] \oplus Tag_u(BF[u + 1..L(BF)])$. Hat eine Funktion $FP_u$ die beschriebene allgemeine Form, so ist sie durch die zwei Funktionen $Tag_u$ und $Scramble_u$ eindeutig bestimmt.

Durch diese Fingerprint-Funktion $FP^{Tag\_u, Scramble\_u}$ wird es damit bei der symmetrischen Verschlüsselung neuartiger Klartexte auf die Verwendung eines Initialisierungsvektors ohne nennenswerte Sicherheitseinbußen zu verzichten und den Klartext dabei vollständig zu verschlüsseln.

Gemäß einer sehr vorteilhaften Weiterbildung kann es dabei vorgesehen sein, dass als die Funktion $Tag_u$ eine kryptographische Hashfunktion genutzt wird, deren Hashwert auf die Länge u auf sichere Weise angepasst wird.

Ferner kann es in einer günstigen Weiterbildung des Verfahrens gemäß der Erfindung auch vorgesehen sein, dass die Funktion $Tag_u$ die Eigenschaft der Nicht-Umkehrbarkeit besitzt und/oder nach mindestens einer Art kollisionsresistent ist.

Die Nicht-Umkehrbarkeit macht es dabei für einen Angreifer praktisch unmöglich, für eine gegebene Bitfolge BF1 eine Bitfolge BF2 derart zu finden, dass $BF1 = FP_u(BF2) \| BF1 [u+1..L(BF)]$ ist. Dabei ist unter einem Angreifer im Sinne der hier vorliegenden Beschreibung jemand zu verstehen, der im Gegensatz zu einem "nicht Angreifer" die bei der Definition bzw. Bestimmung von $FP_u$ ggf. genutzten (geheimen) Schlüssel nicht kennt.

Bezüglich der Kollisionsresistenz sind vier verschiedene Arten denkbar, wobei diese hier jeweils als ein Zweier-Tupel der Form $(r1, r2) \in \{stark, schwach\} \times \{stark, schwach\}$ bezeichnet werden, wobei hier das erste Element r1 die eigentliche FP-Kollisionsresistenz bezeichnet und die Bedeutung des zweiten Elements r2 an die von kryptographischen Hashfunktionen bekannten Kollisionsresistenzbegriffe angelehnt ist.

-   [schwach-schwache FP-Kollisionsresistenz] Es ist praktisch unmöglich, für eine gegebene Bitfolge BF1 eine Bitfolge BF2 derart zu finden, dass $BF1[1..u] = BF2[1..u]$, $BF1[u+1..L(BF1)] \neq BF2[u+1.. L(BF2)]$ und $FP_u (BF1) = FP_u (BF2)$.
-   [stark-schwache FP-Kollisionsresistenz] Es ist für einen Angreifer praktisch unmöglich, für eine gegebene Bitfolge BF1 eine Bitfolge BF2 derart zu finden, dass BF1 $\neq$ BF2 und $FP_u$(BF1) = $FP_u$(BF2).

- [schwach-starke FP-Kollisionsresistenz] Es ist praktisch unmöglich, zwei Bitfolgen BF1 und BF2 derart zu finden, dass BF1[1..u] = BF2[1..u], BF1[u+1..L(BF1)] # BF2[u+1.. L(BF2)] und $FP_u$ (BF1) = $FP_u$ (BF2).
- [stark-starke FP-Kollisionsresistenz] Es ist für einen Angreifer praktisch unmöglich, zwei Bitfolgen BF1 und BF2 derart zu finden, dass BF1 $\neq$ BF2 und $FP_u$ (BF1) = $FP_u$ (BF2).

Dabei ist klar, dass die Nicht-Umkehrbarkeit und alle Arten von Kollisionsresistenzen nur bei einem hinreichend großen u erreicht werden können.

Eine sehr günstige Weiterbildung des Verfahrens kann es nun ferner vorsehen, dass als die Funktion $Tag_u$ eine schlüssellose oder schlüsselabhängige kryptographische Hashfunktion $HASH_{(K\_H)}$ genutzt wird, wobei K_H den Schlüssel bezeichnet, von dem HASH ggf. abhängt und durch die Klammern angezeigt wird, das HASH von K_H abhängen kann oder auch nicht.

Außerdem kann es eine sehr günstige Ausgestaltung des Verfahrens auch vorsehen, dass als die Funktion $Scramble_u$ eine Identitätsfunktion oder eine längenerhaltende Verschlüsselungsfunktion genutzt wird, wobei im Falle der Verschlüsselung die zur Verschlüsselung passende Entschlüsselungsfunktion als Umkehrfunktion genutzt wird. Gemäß einer vorteilhaften Weiterbildung hiervon kann es ferner vorgesehen sein, dass für eine Blockchiffre E mit Blockgröße $L_E$ = u und einen $L_E$ Bit langen symmetrischen Schlüssel K_S als die Funktion $Scramble_u$ die E-Raw-Verschlüsselung mit K_S, also $E^{RAW}_{K\_S}$, genutzt wird.

Es wird in einer vorteilhaften Ausgestaltung des Weiteren vorgeschlagen, die so erzeugte Verschlüsselung der ersten u Bits des Klartextes $CB_1$ als Initialisierungsvektor IV := $CB_1$ für die Verschlüsselung von Teilen des oder des ganzen restlichen Klartextes mit der Blockchiffre E zu verwenden, wobei dafür ein beliebiger einen Initialisierungsvektor verlangender Betriebsmodus genutzt werden kann, wobei davor ggf., abhängig von der Länge von $CB_1$ und je nach gewähltem Betriebsmodus, eine Anpassung des Initialisierungsvektors IV an die vom jeweiligen Betriebsmodus geforderte Länge des Initialisierungsvektors auf sichere Weise, bspw. bei $L(CB_1) = L_E$ eine Kürzung im Falle der Verwendung des IV als Nonce des CTR-Betriebsmodus, vorgenommen wird.

Es wird gemäß einer weiteren vorteilhaften Ausgestaltung der Erfindung vorgeschlagen, bei der Verschlüsselung eines Klartextes mit einer Blockchiffre E der Blockgröße $L_E$ unter Verwendung eines symmetrischen Schlüssels K eine FP-Funktion in der oben beschriebenen Art zu nutzen, also $FP^{Tag\_u, Scramble\_u}$, wobei im allgemeinen Fall $u \neq L_E$ sein kann, und eine allgemeine keinen Initialisierungsvektor verlangende Chiffre EGen zu verwenden, indem $FP^{Tag\_u, Scramble\_u}$ auf die Konkatenation der kompletten ersten u Bits $PB^u_1$ des Klartextes ("Plaintextblock") und ausgewählter oder aller Bits FPInput des restlichen Klartextes angewendet wird, und anschließend der erste Block des Chiffretextes $CB_1$ durch EGen-Verschlüsselung des u Bit langen Ergebnisses $FP^{Tag\_u, Scramble\_u}$ ($PB^u_1$ || FPInput) berechnet wird, also $CB_1$ := EGen($FP^{Tag\_u, Scramble\_u}$ ($PB^u_1$ || FPInput)).

Da es ein Ziel des Verfahrens ist, möglichst kurze Nachrichten zu erzeugen, wird vorgeschlagen, als die allgemeine Chiffre EGen eine längenerhaltende Chiffre zu wählen, so dass bspw. immer $L(CB_1)$ = u gilt. Der Chiffretext $CB_1$ wird dann mit $CB^u_1$ bezeichnet.

Bei der Wahl des Betriebsmodus für die Verschlüsselung des restlichen Klartextes ist hierbei abzuschätzen, inwiefern die tatsächliche Neuartigkeit des so berechneten Initialisierungsvektors sichergestellt ist. Ist die Neuartigkeit des Initialisierungsvektors, bspw. durch das Aufnehmen eines vollständigen sich nicht wiederholenden Zählers in die Bitfolge BF, sichergestellt, so kann jeder Betriebsmodus, der einen neuartigen Initialisierungsvektor verlangt, sicher verwendet werden. Ist hingegen die Neuartigkeit des Initialisierungsvektors lediglich in Abhängigkeit von der Neuartigkeit des Klartextes selbst sichergestellt, diese ist jedoch nicht sichergestellt, die Neuartigkeit des Klartextes bspw. wahrscheinlich aber nicht sicher ist, so hängen mit der Verwendung von bspw. OFB bzw. CTR, aber auch CFB, höhere Risiken zusammen und es sollte vorzugsweise bspw. CBC genutzt werden.

Dadurch kann in vielen Fällen ohne oder ohne nennenswerte Sicherheitseinbußen auf die Verwendung eines Initialisierungsvektors bei der Verschlüsselung des ersten Blocks verzichtet werden. Durch die Verwendung des für neuartige Klartexte neuartigen verschlüsselten ersten Blocks als Initialisierungsvektor für die Verschlüsselung der restlichen Blöcke kann damit für die Verschlüsselung der restlichen Blöcke ein einen Initialisierungsvektor verlangender Betriebsmodus, wie z.B. CBC, CFB, OFB, CTR, etc. genutzt werden.

Gemäß einer vorteilhaften Weiterbildung des erfindungsgemäßen Verfahrens wird dabei die Länge des Initialisierungsvektors IV abhängig von gewähltem Betriebsmodus und/oder abhängig von der Länge von $CB_1$ angepasst.

Eine Alternative Lösung des erfindungsgemäßen Verfahrens gemäß Anspruch 12 sieht die Verschlüsselung eines, vorzugsweise mindestens (u+1) Bit langen, Klartextes mit einer Blockchiffre E der Blockgröße $L_E$ unter Verwendung eines symmetrischen Schlüssels K vor, wobei als Fingerprint-Funktion ($FP_u$) eine Fingerprint-Funktion $FP^{Tag\_u,Scramble\_u}$ (BF) := $Scramble_u$ (BF[1..u]) $\oplus$ $Tag_u$(BF[u + 1..L(BF)]) genutzt wird. Dabei ist $Tag_u$ eine Funktion, die zu Bitfolgen BF beliebiger Länge einen mit einer für die vorgesehene Anwendung ausreichend hohen Wahrscheinlichkeit eindeutigen Wert der Länge u berechnet, wobei $Scramble_u$ eine umkehrbare Funktion ist, die Bitfolgen (BF) der Länge u auf Bitfolgen (BF) der Länge u abbildet, und wobei $\oplus$ für eine bitweise XOR Verknüpfung zweier Bitfolgen (BF) mit gleicher Länge steht. Im Falle der Sicherstellung der Neuartigkeit der in die $\text{Tag}_u$-Funktion der Fingerprint-Funktion $FP^{\text{Tag\_u, Scramble\_u}}$ eingehenden Bitfolge für jede neue Nachricht eine sichere schlüsselabhängige Hashfunktion $HASH_{K\_H}$ als Basis für die $\text{Tag}_u{}^{K\_H}$-Funktion einer

Fingerprint-Funktion $FP_u{}^{K\_H}$ verwendet wird, auf die zusätzliche Verschlüsselung der ersten u Bits des Klartextes mittels EGen verzichtet wird und stattdessen als die Verschlüsselung der ersten u Bits $CB^u{}_1$ direkt der $FP_u{}^{K\_H}$-Fingerprint verwendet wird.

Es kommt also eine Fingerprint-Funktion der Form $FP^{\text{Tag\_u, Scramble\_u}}$, definiert durch $FP^{\text{Tag\_u, Scramble\_u}}(BF) := \text{Scramble}_u(BF[1..u]) \oplus \text{Tag}_u(BF[u + 1..L(BF)])$, zum Einsatz, wobei $\text{Tag}_u$ durch eine sichere schlüsselabhängige Hashfunktion $HASH_{K\_H}$, deren Ausgabelänge an u auf geeignete Weise angepasst ist, realisiert ist, wobei $\text{Scramble}_u$ eine umkehrbare Funktion ist, die Bitfolgen (BF) der Länge u auf Bitfolgen (BF) der Länge u abbildet, und wobei $\oplus$ für eine bitweise XOR-Verknüpfung zweier Bitfolgen (BF) mit gleicher Länge steht, wobei u und $L_E$ nicht zwingend gleich sein müssen, indem die Fingerprint-Funktion $FP^{\text{Tag\_u, Scramble\_u}}$ auf die Konkatenation der kompletten ersten u Bits $PB^u{}_1$ des Klartextes und ausgewählter oder aller Bits FPInput des restlichen Klartextes angewendet wird, und, falls die Neuartigkeit der in die $\text{Tag}_u$-Funktion der Fingerprint-Funktion $FP^{\text{Tag\_u, Scramble\_u}}$ eingehenden Bitfolge FPInput für jede neue Nachricht sichergestellt ist, als die Verschlüsselung der ersten u Bits $CB^u{}_1$ direkt der $FP^{\text{Tag\_u, Scramble\_u}}$-Fingerprint verwendet wird, also $CB^u{}_1 := FP^{\text{Tag\_u, Scramble\_u}}(PB^u{}_1 \| FPInput)$, und die so erzeugte Verschlüsselung der ersten u Bits des Klartextes $CB_1$ als Initialisierungsvektor $IV := CB_1$ für die Verschlüsselung von Teilen des oder des ganzen restlichen Klartextes mit der Blockchiffre E verwendet wird, wobei dafür ein beliebiger einen Initialisierungsvektor (IV) verlangender Betriebsmodus genutzt wird.

Weitere vorteilhafte Ausgestaltungen und verschiedene Ausführungen der erfindungsgemäßen Verfahren ergeben sich aus den weiteren von den Ansprüchen 1 und 12 abhängigen Unteransprüchen und werden aus den Ausführungsbeispielen deutlich, welche nachfolgend unter Bezugnahme auf die Figuren näher erläutert werden.

Dabei zeigen:

Fig. 1    Eine schematische Darstellung der Fingerprint(FP)-Funktion samt ihrer Umkehrung;

Fig. 2    die Funktionsweise der Ver- und Entschlüsselung unter Verwendung der beiden allgemeinen FP-Funktionen als eigenständige Komponente;

Fig. 3    die Funktionsweise der Ver- und Entschlüsselung unter Verwendung der in ihre Bestandteile aufgelösten FP-Funktionen $FP^{\text{Tag\_u, Scramble\_u}}$ und $(FP^{\text{Tag\_,u, Scramble\_u}})^{-1}$;

Fig. 4    die Funktionsweise der beiden FP-Funktionen $FP_u{}^{\text{HASH(K\_H), ID}}$ (für $u = L_E$) und $FP^{\text{HASH(K\_H), E-K\_S}}$ in zusammengefasster Form;

Fig. 5    die Funktionsweise der Ver- und Entschlüsselung (im Falle von $FP_u{}^{\text{HASH(K\_H), ID}}$ für $u = L_E$ und $FP^{\text{HASH(K\_H), E-K\_S}}$) einmal unter Verwendung der beiden FP-Funktionen als eigenständige Komponente;

Fig. 6    die Funktionsweise der Ver- und Entschlüsselung (im Falle von $FP_u{}^{\text{HASH(K\_H), ID}}$ für $u = L_E$ und $FP^{\text{HASH(K\_H), E-K\_S}}$) einmal unter Verwendung der beiden FP-Funktionen als in ihre Bestandteile aufgelösten FP-Funktionen;

Fig. 7    und

Fig. 8    die Arbeitsweise eines alternativen Ver- und Entschlüsselungsverfahrens; und

Fig. 9    eine schematische Darstellung des Verfahrens der DE 10 2021 001 095 A1 als Ergänzung zu den erfindungsgemäßen Verfahren.

Ein erster relevanter Aspekt für das Verfahren zur Verschlüsselung liegt in dem Verfahren zum Erzeugen eines u Bit langen Fingerprints $(FP_u)$ einer Bitfolge. Dieser dient dabei dazu, die Neuartigkeit eines gesamten Klartextes in den ersten u Bits des Klartextes zu kodieren und diese Tatsache für die Verschlüsselung nutzen zu können, es wird also für eine natürliche Zahl $u > 0$ eine Funktion $FP_u$ ("Fingerprint") gesucht, die für eine Bitfolge BF mit $L(BF) > u$ (L(BF) bezeichnet in diesem Dokument die Bitlänge einer Bitfolge BF) eine Bitfolge $FP_u(BF)$ der Länge u derart bestimmt, dass

- aus $BF1 \neq BF2$ mit einer sehr hohen Wahrscheinlichkeit $FP_u(BF1) \neq FP_u(BF2)$ folgt,
- zu $FP_u$ eine FP-Umkehrfunktion $FP_u{}^{-1}$ existiert, so dass stets

$$FP_u{}^{-1}(FP_u(BF) \| BF[u+1..L(BF)]) = BF[1..u] \quad \text{gilt,}$$

wobei für eine Bitfolge BF und natürliche Zahlen i, j mit $1 \leq i \leq j \leq L(BF)$ BF[i..j] die aus den Bits i bis j bestehende Teilfolge von BF bezeichnet, also bspw. $BF = BF[1..L(BF)]$ gilt, und $\|$ die Konkatenation zweier Bit- oder Bytefolgen bezeichnet,

- optional die Bedingung der Nicht-Umkehrbarkeit erfüllt ist, es für einen Angreifer also praktisch unmöglich ist, für eine gegebene Bitfolge BF1 eine Bitfolge BF2 derart zu finden, dass BF1 = $FP_u(BF2) \| BF1[u+1..L(BF)]$,

- optional $FP_u$ auch kollisionsresistent ist.

Es wird vorgeschlagen, für eine Funktion $FP_u$ die allgemeine Form

$$FP_u(BF) = Scramble_u(BF[1..u]) \oplus Tag_u(BF[u + 1..L(BF)])$$

zu verwenden, wobei

- $Tag_u$ eine Funktion ist, die zu Bitfolgen beliebiger Längen einen mit hoher Wahrscheinlichkeit eindeutigen bspw. pseudozufälligen Wert der Länge u berechnet, beispielsweise eine kryptographische Hashfunktion, deren Hashwert bei Bedarf auf die Länge u auf sichere Weise angepasst wird, also indem bspw. im Falle eines zu langen Hashwertes dessen letzte u Bits als $Tag_u(BF)$ genutzt werden oder im Falle eines zu kurzen Hashwerts dieser bspw. mit Hilfe eines kryptographischen Schlüsselstreckung-Verfahrens auf die Länge u gestreckt wird.

   o Durch eine geeignete Wahl von $Tag_u$ können die schwach-schwache und die schwach-starke FP-Kollisionsresistenzen erreicht sowie die Nicht-Umkehrbarkeit, die stark-schwache FP-Kollisionsresistenz und die stark-starke FP-Kollisionsresistenz möglich gemacht werden.

- $Scramble_u$ eine umkehrbare Funktion ist, die Bitfolgen der Länge u auf Bitfolgen der Länge u abbildet, beispielsweise eine längenerhaltende Verschlüsselung (mit der dazugehörigen Entschlüsselung als Umkehrfunktion),

   o Durch eine geeignete Wahl von $Scramble_u$ können bei gleichzeitiger geeigneter Wahl der $Tag_u$-Funktion die nur auf den Angreifer bezogenen Eigenschaften der Nicht-Umkehrbarkeit, der stark-schwachen FP-Kollisionsresistenz und der stark-starken FP-Kollisionsresistenz erreicht werden.

- $\oplus$ die bitweise XOR-Verknüpfung zweier gleichlanger Bitfolgen bezeichnet.

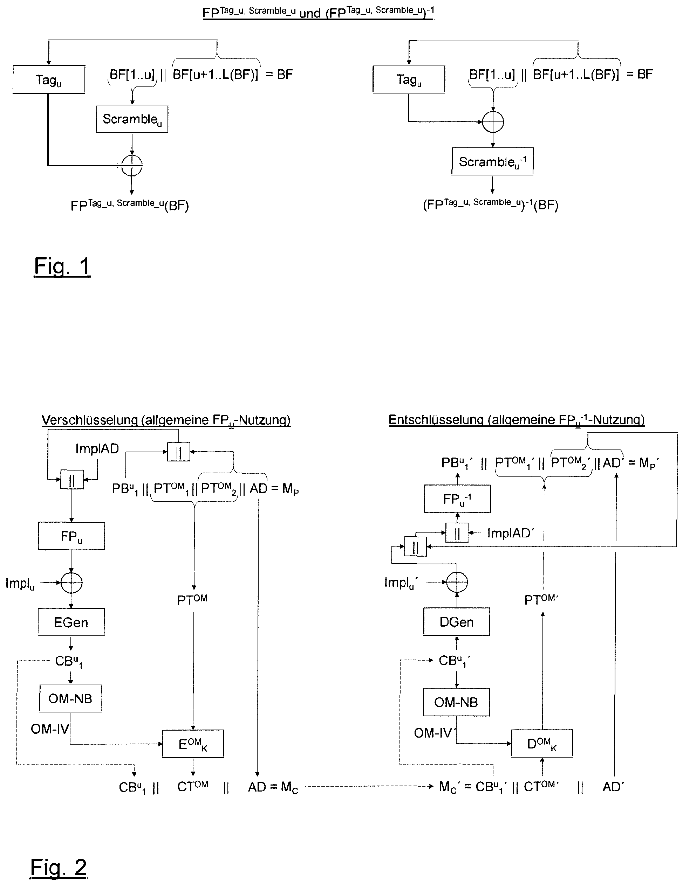

Die FP-Umkehrfunktion von $FP_u$ ist dann gegeben durch
$FP_u^{-1}(BF) = Scramble_u^{-1}(BF[1..u] \oplus Tag_u(BF[u + 1..L(BF)]))$. Hat eine Funktion $FP_u$ die beschriebene allgemeine Form, so ist sie durch die zwei Funktionen $Tag_u$ und $Scramble_u$ eindeutig bestimmt. Die durch diese zwei Funktionen beschriebene FP-Funktion wird hier mit $FP^{Tag\_u, Scramble\_u}$ bezeichnet. Diese sind in der Darstellung der Figur 1 in einem Ablaufdiagramm zu erkennen.

Für eine allgemeine Chiffre EGen (Encryption), die dazugehörige Entschlüsselungsfunktion DGen (Decryption) und eine Bitfolge BF bezeichnet EGen(BF) das Ergebnis der Verschlüsselung von BF mit EGen und DGen(BF) die Entschlüsselung von BF mit DGen, es gilt also stets DGen(EGen(BF)) = BF.

Für eine Blockchiffre E (Encryption) mit der dazugehörigen Entschlüsselungsfunktion D (Decryption) und einen Initialisierungsvektor benötigenden Betriebsmodus OM ("Operation Mode") bezeichnet $E^{OM}_K(IV, PT)$ das Ergebnis der E-Verschlüsselung des Klartextes PT ("Plaintext") einer zu $E^{OM}$ passenden Länge mit dem Schlüssel K im Betriebsmodus OM unter Verwendung des Initialisierungsvektors IV und $D^{OM}_K(IV, CT)$ das Ergebnis der D-Entschlüsselung des Chiffretextes CT einer zu $E^{OM}$ passenden Länge mit dem Schlüssel K im Betriebsmodus OM unter Verwendung des Initialisierungsvektors IV.

Das vorgeschlagene Verschlüsselungsverfahren erhält mehrere Bestandteile einer Nachricht $M_P$ als Eingabe und verschlüsselt Teile davon mit dem Schlüssel K. Die nachfolgende Beschreibung des Verschlüsselungsverfahrens besteht aus einer Beschreibung der Komponenten, die das Verfahren nutzt, einer Beschreibung der Eingabeformate und einer Beschreibung des eigentlichen Verfahrens, das unter Verwendung der Komponenten aus den Bestandteilen der Klartext-Nachricht $M_P$ eine vollständig oder zum Teil verschlüsselte Nachricht $M_C$ erzeugt.

Komponenten des Verschlüsselungssystems umfassen:

- Eine allgemeine längenerhaltende sichere Chiffre EGen
- Eine Blockchiffre E der Blockgröße $L_E$
- $E^{OM}$, im einen Initialisierungsvektor der Länge $L_{OM-IV}$ benötigenden Betriebsmodus OM betriebene Blockchiffre E
- Eine Fingerprint-Funktion $FP_u$, die im Folgenden durch FP abgekürzt wird.
- Eine optionale an den Betriebsmodus OM angepasste Nachbearbeitungsfunktion OM-NB, die aus einer Bitfolge der Länge u einen pseudozufälligen OM-Initialisierungsvektor auf sichere Weise erzeugt, indem bspw. die Bitfolge zuerst symmetrisch verschlüsselt und anschließend mit etablierten Verfahren eine Längenanpassung an $L_{OM-IV}$ vorgenommen wird.

Eingabeformate:

- Ein symmetrischer Schlüssel K der Länge $L_E$
- Eine Nachricht $M_P$ bestehend aus einem zu verschlüsselnden Klartextanteil PT und einem nachfolgenden assoziierten Anteil AD ("Associated Data"), also $M_P = PT \,\|\, AD$, wobei $L(PT) > u$, PT also länger als u ist. Der assoziierte Anteil AD wird nicht verschlüsselt, er trägt aber zur Bildung des OM-Initialisierungsvektors und damit zu seiner Neuartigkeit bei.

    o Der Klartext-Anteil PT besteht wiederum aus drei Teilen $PB^u_1$, $PT^{OM}_1$ und $PT^{OM}_2$, also $PT = PB^u_1 \,\|\, PT^{OM}_1 \,\|\, PT^{OM}_2$, wobei $PB^u_1$ und $PT^{OM}_2$ zur Bildung des Initialisierungsvektors beitragen und $PT^{OM}_1$ nicht zur Bildung des OM-Initialisierungsvektors beiträgt, mit

      - $L(PB^u_1) = u$, $PB^u_1$ ist also genau u Bit lang und
      - $PT^{OM}_1 \,\|\, PT^{OM}_2$ hat eine zu $E^{OM}$ passende Länge, so dass $PT^{OM}_1 \,\|\, PT^{OM}_2$ von $E^{OM}$ verschlüsselt werden kann.

- Zwei implizite Bitfolgen, die zur Erhöhung der Wahrscheinlichkeit der Neuartigkeit des OM-Initialisierungsvektors beitragen können und dem Sender sowie dem Empfänger gleichermaßen bekannt sind und dadurch nicht Teil der Nachricht $M_P$ sind, bspw. ein beiden Seiten bekannter Zähler oder der Hashwert bzw. die Verschlüsselung eines solchen Zählers.

    o Bitfolge ImplAD ("implicit additional data") beliebiger Länge, die als zusätzliche Eingabe für die Fingerprint-Funktion FP dient.

      - Soll auf die Verwendung von ImplAD verzichtet werden, so kann als ImplAD die leere Bitfolge gewählt werden.

    o Bitfolge $Impl_u$ der Länge u, mit der der FP-Fingerprint XOR-verknüpft wird.

      - Soll auf die Verwendung von $Impl_u$ verzichtet werden, so kann als $Impl_u$ die aus u 0-Bits bestehende Bitfolge gewählt werden (das 0-Bit ist bzgl. XOR das neutrale Element).

Verschlüsselung $E^{FP,EGen, OM, OM\text{-}NB}$ mit einem Schlüssel K, also $E^{FP,EGen, OM, OM\text{-}NB}_K$:

- Eingabe:

    1. $PB^u_1$, $PT^{OM}_1$, $PT^{OM}_2$, AD mit

$$M_P = PB^u_1 \,\|\, PT^{OM}_1 \,\|\, PT^{OM}_2 \,\|\, AD$$

    2. ImplAD, $Impl_u$

- Bestimmung der verschlüsselten Anteile von $M_C$:

    1.

$$FPB := FP(PB^u_1 \,\|\, PT^{OM}_2 \,\|\, AD \,\|\, ImplAD)$$

    2.

$$CB^u_1 := EGen(FPB \oplus Impl_u)$$

    3.

$$OM\text{-}IV := OM\text{-}NB(CB^u_1)$$

    4.

$$CT^{OM} := E^{OM}{}_K(OM\text{-}IV, PT^{OM}{}_1 \| PT^{OM}{}_2)$$

- Ausgabe:

    1. $CB^u{}_1$, $CT^{OM}$, es gilt dann

$$M_C := CB^u{}_1 \| CT^{OM} \| AD$$

- Zusammenfassend wird vorgeschlagen, die Verschlüsselung $M_C$ einer aus $PB^u{}_1$, $PT^{OM}{}_1$, $PT^{OM}{}_2$, AD bestehenden Klartextnachricht
$M_P = PB^u{}_1 \| PT^{OM}{}_1 \| PT^{OM}{}_2 \| AD$ wie folgt zu bestimmen:

$$E^{FP, EGen, OM, OM\text{-}NB}{}_K(PB^u{}_1, PT^{OM}{}_1, PT^{OM}{}_2, AD, ImplAD, Impl_u) :=$$

$$CB^u{}_1 \| E^{OM}{}_K(OM\text{-}NB(CB^u{}_1), PT^{OM}{}_1 \| PT^{OM}{}_2)$$

mit

$$CB^u{}_1 := EGen(FP(PB^u{}_1 \| PT^{OM}{}_2 \| AD \| ImplAD) \oplus Impl_u)$$

Komponenten des Endschlüsselungssystems umfassen:

- Die zur allgemeinen sicheren längenerhaltenden Chiffre EGen gehörende Entschlüsselungsfunktion DGen
- Die zur Blockchiffre E gehörende Entschlüsselungsfunktion D
- Die zu $E^{OM}$ gehörende Entschlüsselungsfunktion $D^{OM}$
- FP, OM-NB wie bei der Verschlüsselung, $FP^{-1}$ die Umkehrfunktion zu FP

Eingabeformate:

- Ein symmetrischer Schlüssel K wie bei der Verschlüsselung
- Eine Nachricht $M_C'$ bestehend aus einem Chiffretext CT' und einem nachfolgenden nicht verschlüsselten assoziierten Anteil AD', also $M_C' = CT' \| AD'$, wobei $L(CT') > u$.

    o Der Chiffretext-Anteil CT' besteht wiederum aus zwei Teilen, einem verschlüsselten ersten Block $CB^u{}_1'$ und einem nachfolgenden Chiffretext $CT^{OM'}$, also $CT' = CB^u{}_1' \| CT^{OM'}$ und $M_C' = CB^u{}_1' \| CT^{OM'} \| AD'$, mit

    - $L(CB^u{}_1') = u$, $CB^u{}_1'$ ist also genau u Bit lang und
    - $CT^{OM'}$ hat eine zu $D^{OM}$ passende Länge, so dass $CT^{OM'}$ von $D^{OM}$ entschlüsselt werden kann.

- ImplAD', $Impl_u'$ wie bei der Verschlüsselung

Entschlüsselung $D^{FP, DGen, OM, OM\text{-}NB}$ mit einem Schlüssel K, also $D^{FP, DGen, OM, OM\text{-}NB}{}_K$:

- Eingabe:

    1. $CB^u{}_1'$, $CT^{OM'}$, AD' mit

$$M_C' = CB^u{}_1' \| CT^{OM'} \| AD'$$

    2. $L_{PT1}$, Länge des Klartext-Anteils $PT^{OM}{}_1$
    3. ImplAD', $Impl_u'$

- Bestimmung der entschlüsselten Anteile von Mp':

    1.

$$OM\text{-}IV' := OM\text{-}NB(CB^u_1')$$

2.

$$PT^{OM'} := D^{OM}_K(OM\text{-}IV', CT^{OM'})$$

3.

$$PT^{OM}_1' := PT^{OM'}[1..L_{PT1}] \text{ und}$$

$$PT^{OM}_2' := PT^{OM'}[L_{PT1}+1..L(PT^{OM'})]$$

4.

$$PB^u_1' := FP^{-1}((DGen(CB^u_1') \oplus Impl_u') \| PT^{OM}_2' \| AD \| ImplAD')$$

- Ausgabe:

1. $PB^u_1$', $PT^{OM'}$, es gilt dann

$$M_P' := PB^u_1' \| PT^{OM'} \| AD'$$

Zusammenfassend wird vorgeschlagen, die Entschlüsselung $M_P$' einer aus $CB^u_1$', $CT^{OM'}$, AD' bestehenden Chiffretextnachricht

$M_C$' = $CB^u_1$' $\|$ $CT^{OM'}$ $\|$ AD' wie folgt zu definieren:

$$D^{FP, DGen, OM, OM\text{-}NB}_K(CB^u_1', CT^{OM'}, AD', L_{PT1}, ImplAD', Impl_u') :=$$

$$FP^{-1}((DGen(CB^u_1') \oplus Impl_u') \| PT^{OM'}[L_{PT1}+1..L(PT^{OM'})] \|$$

$$AD \| ImplAD') \| PT^{OM'}$$

mit

$$PT^{OM'} := D^{OM}_K(OM\text{-}NB(CB^u_1'), CT^{OM'})$$

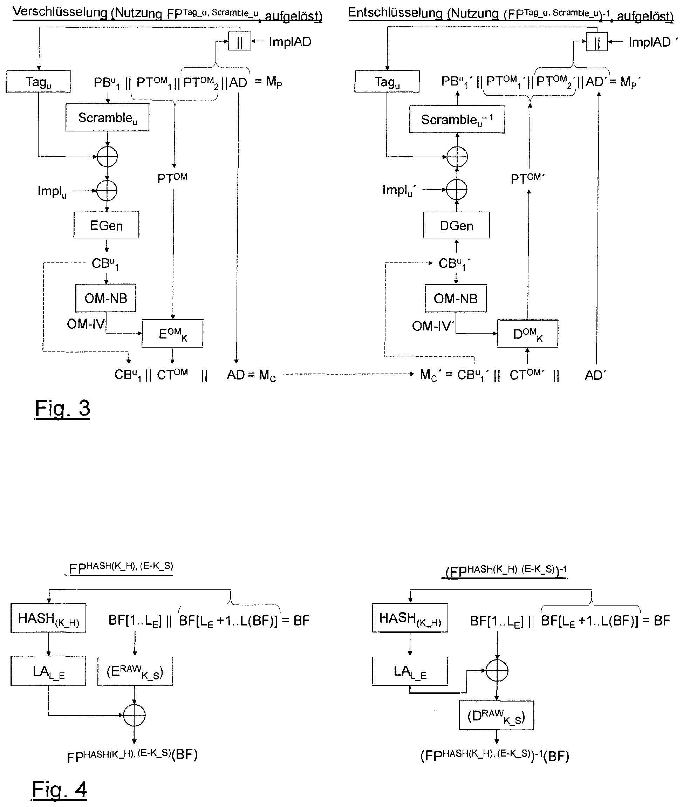

Die beiden Figuren 2 und 3 zeigen die Funktionsweise der Ver- und Entschlüsselung einmal unter Verwendung der beiden allgemeinen FP-Funktionen als eigenständige Komponente und einmal mit in ihre Bestandteile aufgelösten FP-Funktionen $FP^{Tag,\_u}$, Scramble_u und $(FP^{Tag,\_u, Scramble\_u})^{-1}$.

Dabei kann für die FP-Teilfunktion $Tag_u$ als Basis eine schlüssellose wie bspw. SHA-256 oder SHA-512 oder eine schlüsselabhängige wie bspw. HMAC, CBC-MAC oder CMAC kryptographische Hashfunktion verwendet werden. Die Verwendung einer schlüssellosen kryptographischen Hashfunktion hat den Vorteil, dass die Einweg-Eigenschaft sowie ggf. die schwache bzw. starke Kollisionsresistenz der kryptographischen Hashfunktion unabhängig von der Kenntnis eines Schlüssels gelten, während im Falle einer schlüsselabhängigen kryptographischen Hashfunktion diese Eigenschaften bei Kenntnis des verwendeten Schlüssels nicht immer gegeben sind. Die Verwendung einer schlüsselabhängigen kryptographischen Hashfunktion hat den Vorteil, dass ein potentieller Angreifer ohne Kenntnis des Schlüssels keinen Hashwert von einer ihm bekannten Bitfolge berechnen kann. HMAC oder auch Schlüsselableitungsfunktionen (KDF) kombinieren die beiden Ansätze und vereinen damit die Vorteile der beiden Klassen von Hashfunktionen. Eine schlüssellose kryptographische Hashfunktion wird hier mit HASH bezeichnet, eine den Schlüssel K_H verwendende schlüsselabhängige kryptographische Hashfunktion wird mit $HASH_{K\_H}$ bezeichnet, eine entweder schlüssellose kryptographische Hashfunktion oder eine den Schlüssel K_H verwendende schlüsselabhängige kryptographische Hashfunktion wird mit $HASH_{(K\_H)}$ bezeichnet. Die Bezeichnung $Tag_u^{K\_H}$ wird genutzt, wenn $Tag_u$ eine von einem Schlüssel K_H abhängige Hashfunktion $HASH_{K\_H}$ als Basis verwendet, $FP_u^{K\_H}$ zeigt an, dass die dazugehörige $Tag_u$-Funktion eine von einem Schlüssel K_H abhängige Hashfunktion $HASH_{K\_H}$ als Basis verwendet. Verwendet $FP_u$ eine kryptographische Hashfunktion, die die Bedingung der schwachen (starken) Hash-Kollisionsresistenz erfüllt, als Basis für $Tag_u$, so hat $FP_u$

die Eigenschaft der schwach-schwachen (schwach-starken) FP-Kollisionsresistenz. Außerdem wird durch die Verwendung einer kryptographischen Hashfunktion als Basis für $Tag_u$ die Voraussetzung für die Nicht-Umkehrbarkeit, die stark-schwache bzw. die stark-starke FP-Kollisionsresistenz von $FP_u$ geschaffen.

Erzeugt $HASH_{(K\_H)}$ einen Hashwert einer von u abweichenden Länge, so wird vorgeschlagen, den von $HASH_{(K\_H)}$ erzeugten Hashwert mit Hilfe einer Längenanpassungsfunktion $LA_u$ an u anzupassen und die resultierende Komposition $LA_u \circ HASH_{(K\_H)}$ als $Tag_u$ zu verwenden, wobei $LA_u$ eine Funktion ist, die aus einer pseudozufälligen Bitfolge PZBF beliebiger Länge eine pseudozufällige Bitfolge der Länge u mit Hilfe aus der Kryptographie bekannter Verfahren erzeugt, indem bspw. im Falle einer zu langen Ausgangsbitfolge PZBF die letzten u Bits von PZBF als $LA_u$(PZBF) genutzt werden oder im Falle einer zu kurzen Bitfolge PZBF diese bspw. mit Hilfe eines Schlüsselstreckung-Verfahrens auf die Länge u gestreckt wird.

Es wird des Weiteren vorgeschlagen, für die Funktion $Scramble_u$ die Identitätsfunktion ID, die die Bitfolge unverändert lässt, was einem Verzicht auf eine $Scramble_u$-Funktion gleichkommt, zu verwenden. Die Umkehrfunktion zur Identitätsfunktion ist die Identitätsfunktion ID selbst. Diese besonders einfache Variante von $Scramble_u$ führt wiederum zu einer einfachen $FP_u$-Funktion, die vorteilhaft genutzt werden kann, wenn bspw. die Nicht-Umkehrbarkeit der $FP_u$-Funktion und die stark-schwache bzw. die stark-starke FP-Kollisionsresistenzen nicht gefordert sind.

Für eine schlüssellose oder schlüsselabhängige kryptographische Hashfunktion $HASH_{(K\_H)}$ bezeichnet $FP_u^{HASH(K\_H),\ ID}$ die $HASH_{(K\_H)}$ als $Tag_u$-Funktion und die Identitätsfunktion [ID] als $Scramble_u$-Funktion nutzende $FP_u$-Funktion, wobei die Anwendung einer entsprechenden Längenanpassungsfunktion $LA_u$ angenommen wird. $FP_u^{HASH(K\_H),\ ID}$ bildet also den $HASH_{(K\_H)}$-Hashwert der außerhalb des ersten Klartextblocks liegenden Bits des Klartextes und addiert diesen nach einer Längenanpassung durch $LA_u$ per $\oplus$ an die unveränderten ersten u Bits des Klartextblocks. $FP_u^{HASH(K\_H),\ ID}$ ist schwach-schwach bzw. schwach-stark FPkollisionsresistent, wenn $HASH_{(K\_H)}$ seinerseits schwach bzw. stark kollisionsresistent ist.

Es kann jedoch Konstellationen geben, in denen die Nicht-Umkehrbarkeit der $FP_u$-Funktion und/oder deren stark-schwache und/oder deren stark-starke FP-Kollisionsresistenz von Vorteil sind. Bspw. für so einen Fall wird vorgeschlagen, für die Funktion $Scramble_u$ eine längenerhaltende Verschlüsselung zu verwenden. Man beachte, dass diese Verschlüsselung nicht notwendigerweise stark sein muss, da das Ergebnis von $Scramble_u$ nicht offengelegt sondern weiter mit EGen verschlüsselt wird, die Stärken der auf den Angreifer bezogenen Eigenschaften der korrespondierenden $FP_u$- Funktion jedoch direkt von der Stärke der verwendeten $Scramble_u$-Verschlüsselung abhängen.

Im Falle von $u = L_E$ für eine Blockchiffre E kann die $E^{RAW}$-Verschlüsselung als vom Angreifer nicht zu berechnende bzw. nicht umzukehrende keinen Initialisierungsvektor benötigende längenerhaltende Verschlüsselung vorteilhaft eingesetzt werden. Ist u gleich der Blockgröße einer symmetrischen Chiffre E, ist also $u = L_E$, so wird vorgeschlagen, als Funktion $Scramble_u$ die E-Raw-Verschlüsselung zu verwenden, also $Scramble_u := E^{RAW}_{K\_S}$ für einen symmetrischen Schlüssel K_S. Die Umkehrfunktion zu $E^{RAW}_{K\_S}$ ist die dazugehörige Entschlüsselungsfunktion $D^{RAW}_{K\_S}$. Durch die Verwendung einer E-Raw-Verschlüsselung als $Scramble_u$ bei gleichzeitiger Verwendung einer kryptographischen Hashfunktion $HASH_{(K\_H)}$ als $Tag_u$ werden auch die nur auf den Angreifer bezogenen Eigenschaften der Nicht-Umkehrbarkeit der $FP_u$-Funktion, der stark-schwachen FP-Kollisionsresistenz bzw. der stark-starken FP-Kollisionsresistenz erreicht.

Für eine schlüssellose oder schlüsselabhängige kryptographische Hashfunktion $HASH_{(K\_H)}$ und eine Blockchiffre E mit einem passenden symmetrischen Schlüssel K_S bezeichnet $FP^{HASH(K\_H),\ E\text{-}K\_S}$ die $HASH_{(K\_H)}$ als $Tag_u$-Funktion und $E^{RAW}_{K\_S}$ als $Scramble_u$-Funktion nutzende $FP_u$-Funktion, wobei $u = L_E$ ist und die Anwendung einer entsprechenden Längenanpassungsfunktion $LA_{L\_E}$ angenommen wird. $FP^{HASH(K\_H),\ E\text{-}K\_S}$ bildet also den $HASH_{(K\_H)}$-Hashwert der außerhalb des ersten Klartextblocks liegenden Bits des Klartextes und addiert diesen nach einer Längenanpassung durch $LA_{L\_E}$ per $\oplus$ an die E-Raw-Verschlüsselung des ersten Klartextblocks. $FP^{HASH(K\_H),\ E\text{-}K\_S}$ hat die Eigenschaft der Nicht-Umkehrbarkeit und ist stark-schwach bzw. stark-stark FPkollisionsresistent, wenn $HASH_{(K\_H)}$ schwach bzw. stark kollisionsresistent ist.

Die Figur 4 zeigt in zusammengefasster Form die Funktionsweise der beiden FP-Funktionen $FP_u^{HASH(K\_H),\ ID}$ (für $u = L_E$) und $FP^{HASH(K\_H),\ E\text{-}K\_S}$, wobei $FP^{HASH(K\_H),\ (E\text{-}K\_S)}$ für beide dieser FP-Funktionen steht, ($E^{RAW}_{K\_S}$) die Identitätsfunktion ID oder die E-Raw-Verschlüsselung $E^{RAW}_{K\_S}$ und ($D^{RAW}_{K\_S}$) die Identitätsfunktion ID oder die E-Raw-Entschlüsselung $D^{RAW}_{K\_S}$ bezeichnet.

Dabei können bei dem oben beschriebenen Verschlüsselungsverfahren, bspw. bei $E^{FP,EGen,OM,OM\_NB}_K$, als FP-Funktionen $FP_u^{HASH(K\_H),\ ID}$ oder $FP^{HASH(K\_H),\ E\text{-}K\_S}$ verwendet werden.

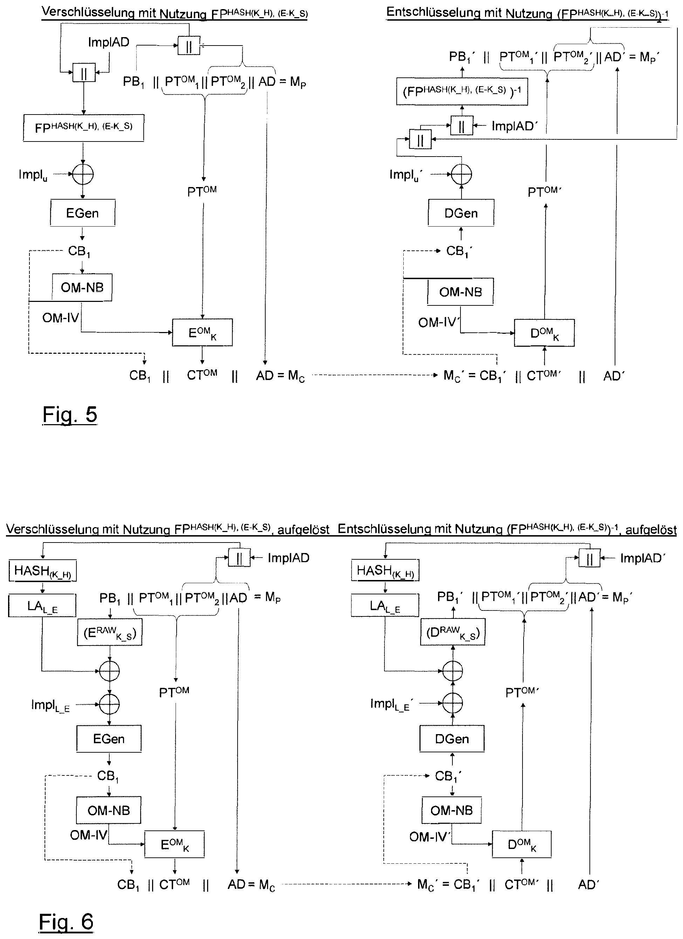

Die beiden Figuren 5 und 6 zeigen die Funktionsweise der Ver- und Entschlüsselung (für $u = L_E$) einmal unter Verwendung der beiden FP-Funktionen als eigenständige Komponente und einmal mit in ihre Bestandteile aufgelösten FP-Funktionen.

Eine weitere vorteilhafte Ausprägung des oben beschriebenen erfindungsgemäßen Verschlüsselungsverfahrens, bspw. des Verfahrens $E^{FP,EGen,\ OM,\ OM\text{-}NB}$, besteht darin, als allgemeine Chiffre EGen die E-Raw-Verschlüsselung einer Blockchiffre E der Blockgröße $L_E = u$ unter Verwendung eines symmetrischen $L_E$ Bit langen Schlüssels K, also $E^{RAW}_K$, zu verwenden.

Mit der Verwendung von $E^{RAW}{}_K$ als EGen kann die Verschlüsselung $M_C$ einer aus $PB_1$, $PT^{OM}{}_1$, $PT^{OM}{}_2$, AD bestehenden Klartextnachricht

$M_P = PB_1 \,||\, PT^{OM}{}_1 \,||\, PT^{OM}{}_2 \,||\, AD$ mit $L(PB_1) = L_E$ in Abhängigkeit von den beiden impliziten nicht zur Nachricht gehörenden Bitfolgen ImplAD und $Impl_u$ wie folgt definiert werden:

$$E^{FP, E\text{-}Raw, OM, OM\text{-}NB}{}_K(PB_1, PT^{OM}{}_1, PT^{OM}{}_2, AD, ImplAD, Impl_u) :=$$

$$CB_1 \,||\, E^{OM}{}_K(OM\text{-}NB(CB_1), PT^{OM}{}_1 \,||\, PT^{OM}{}_2)$$

mit

$$CB_1 := E^{RAW}{}_K(FP_u(PB_1 \,||\, PT^{OM}{}_2 \,||\, AD \,||\, ImplAD) \oplus Impl_u)$$

und die Entschlüsselung $M_P$' einer aus $CB_1$', $CT^{OM}$', AD' bestehenden Chiffretextnachricht $M_C$' = $CB_1$' $||$ $CT^{OM}$' $||$ AD' mit $L(CB_1') = L_E$ in Abhängigkeit von $L_{PT1}$ und den beiden impliziten nicht zur Nachricht gehörenden Bitfolgen ImplAD' und $Impl_u$' wie folgt definiert werden:

$$D^{FP, D\text{-}Raw, OM, OM\text{-}NB}{}_K(CB_1{}', CT^{OM\prime}, AD{}', L_{PT1}, ImplAD{}', Impl_u{}') :=$$

$$FP_u{}^{-1}((D^{RAW}{}_K(CB_1{}') \oplus Impl_u{}') \,||\, PT^{OM\prime}[L_{PT1}+1..L(PT^{OM\prime})] \,||\, AD \,||\, ImplAD{}') \,||$$

$$PT^{OM\prime}$$

mit

$$PT^{OM\prime} := D^{OM}{}_K(OM\text{-}NB(CB^u{}_1{}'), CT^{OM\prime})$$

Wird für ein beliebiges hinreichend großes u eine sichere schlüsselabhängige Hashfunktion $HASH_{K\_H}$, bspw. eine den Schlüssel K_H verwendende sichere Schlüsselableitungsfunktion, als Basis für die $Tag_u{}^{K\_H}$-Funktion einer FP-Funktion $FP_u{}^{K\_H}$ verwendet, so ist es für einen Angreifer nicht möglich, für eine vorgegebene Bitfolge BF ohne Kenntnis des Schlüssels K_H den Wert $Tag_u{}^{K\_H}(BF)$ zu bestimmen. Ist darüber hinaus sichergestellt, dass die in die Berechnung des Wertes $Tag_u{}^{K\_H}(BF)$ eingehende Bitfolge BF für jede neue Nachricht neuartig ist, so ist der mit Hilfe von $Tag_u{}^{K\_H}$ berechnete Wert $Tag_u{}^{K\_H}(BF)$ für jede neue Nachricht ebenfalls neuartig. Sind diese beiden Bedingungen erfüllt, so kann der u Bit lange Fingerprint, der sich durch die XOR-Verknüpfung des u Bit langen Ergebnisses der Anwendung einer $Scramble_u$-Funktion auf die ersten u Bits des Klartextes mit dem ebenfalls u Bit langen (neuartigen und geheimen) Wert $Tag_u{}^{K\_H}(BF)$ ergibt, als eine Verschlüsselung der ersten u Bits des Klartextes mit dem u Bit langen neuartigen Schlüssel $Tag_u{}^{K\_H}(BF)$ angesehen werden.

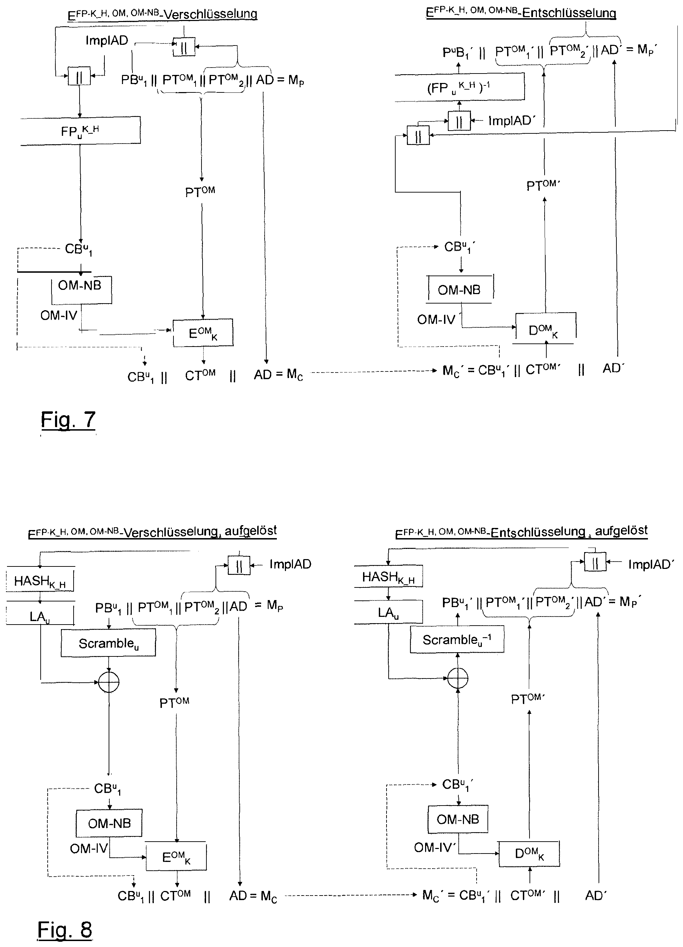

Es wird daher vorgeschlagen, im Falle der Sicherstellung der Neuartigkeit der in die $Tag_u$-Funktion der Fingerprint-Funktion $FP_u$ eingehenden Bitfolge für jede neue Nachricht eine sichere schlüsselabhängige Hashfunktion $HASH_{K\_H}$ als Basis für die $Tag_u{}^{K\_H}$-Funktion einer FP-Funktion $FP_u{}^{K\_H}$ zu verwenden, auf die zusätzliche Verschlüsselung der ersten u Bits des Klartextes mittels EGen zu verzichten und stattdessen als die Verschlüsselung der ersten u Bits $CB^u{}_1$ direkt den $FP_u{}^{K\_H}$-Fingerprint zu verwenden, also bspw. im Falle des oben beschriebenen Verschlüsselungsverfahrens $E^{FP, EGen, OM, OM\text{-}NB}$ als $CB^u{}_1$ den Wert $FP_u{}^{K\_H}(PB^u{}_1 \,||\, PT^{OM}{}_2 \,||\, AD \,||\, ImplAD)$ zu verwenden, also $CB^u{}_1 :=$ $FP_u{}^{K\_H}(PB^u{}_1 \,||\, PT^{OM}{}_2 \,||\, AD \,||\, ImplAD)$. Das von $E^{FP, EGen, OM, OM\text{-}NB}$ auf diese Weise abgeleitete Verschlüsselungsverfahren wird mit $E^{FP\text{-}K\_H, OM, OM\text{-}NB}$ bezeichnet. Die folgenden beiden Figuren 7 und 8 zeigen die Arbeitsweise eines derartigen Verfahrens. Dabei kann auf die Verwendung des impliziten Wertes $Impl_u$ verzichtet werden, da die Neuartigkeit von $CB^u{}_1$ bereits durch die Neuartigkeit von $(PT^{OM}{}_2 \,||\, AD \,||\, ImplAD)$ sichergestellt ist. Man beachte, dass bei der Anwendung von $E^{FP\text{-}K\_H, OM, OM\text{-}NB}$ für die Verschlüsselung der ersten u Bits ausschließlich der Schlüssel K_H verwendet wird und insb. der Schlüssel K dabei nicht verwendet wird. Man beachte außerdem, dass das Verfahren keine speziellen Anforderungen an die $Scramble_u$-Funktion von $FP_u{}^{K\_H}$ stellt.

Das vorgeschlagene Verfahren ermöglicht eine gewisse schwache Integritätsprüfung der empfangenen Nachricht. Der Grund hierfür ist, dass der mit Hilfe der kryptographischen Hashfunktion $HASH_{(K\_H)}$ erzeugte Hashwert in die Verschlüsselung des ersten Klartextblockes $PB_1$ einfließt und bei der Entschlüsselung von diesem wieder "abgezogen" wird. Somit führt jede Änderung der verschlüsselten Nachricht $M_C$', also des Chiffretextes CT' oder der zusätzlichen Daten AD', insb. unabhängig vom Block, in dem diese Änderung stattgefunden hat, zu einer Abweichung des bei der Entschlüsselung erhaltenen ersten Klartextblockes $PB_1$' vom Originalklartextblock $PB_1$ (was für die anderen Teile der Nachricht, insb. für andere Blöcke des Chiffretextes CT', in dieser Allgemeinheit nicht zutrifft). Daher wird vorgeschlagen, das Format der Klartextes PT so zu gestalten, dass der erste Klartextblock $PB_1$ möglichst vorhersagbare, also wenig Entropie enthaltende, insb. starken Konsistenzregeln gehorchende, also eine maximal mögliche Redundanz aufweisende Informationen enthält, so dass die Chance erhöht wird, dass der Empfänger eine Veränderung des ersten Klartextblocks mit einer hohen Wahrscheinlichkeit durch Konsistenzprüfungen, bspw. bei dessen Parsen, erkennen kann. Stellt der Empfänger nach der Entschlüsselung fest, dass eine der Konsistenzregeln verletzt worden ist, so kann er daran erkennen, dass die Nachricht $M_C$' manipuliert worden ist und ggf. eine Ausnahmebehandlung einleiten. Beispiele für solche redundanzenthaltenden Informationen könnten die Empfängerkennung, die Senderkennung, die genutzte Protokollversion etc. sein.

Bei manchen Betriebsmodi, bspw. CBC, können nur vollständige Klartextblöcke verschlüsselt werden. Ist der letzte Klartextblock unvollständig, so wird ein Paddingverfahren verwendet, um ihn aufzufüllen. Wird Padding verwendet und handelt es sich um Klartexte fester dem Sender und dem Empfänger bekannter Länge, was bei kurzen Datagrammartigen Nachrichten oft der Fall ist, so wird vorgeschlagen, die nicht genutzten Padding-Bits, deren Anzahl $L_{pad}$ in diesem Fall für jeden Klartext gleich ist, an eine feste Stelle des ersten Klartextblockes $PB_1$, bspw. an dessen Ende, einzufügen und den Rest des Klartextes entsprechend um $L_{pad}$ Bits zum Ende des Klartexts hin zu verschieben. Auf diese Weise wird der letzte Klartextlock vollständig, es ist kein Padding mehr notwendig, die Länge des verschlüsselten Klartextes CT ändert sich dadurch aber nicht. Es wird des Weiteren vorgeschlagen, die auf diese Weise zum ersten Klartextblock $PB_1$ hinzugekommenen Bits zu nutzen, um die Authentifizierung der Nachricht zu stärken, indem diese $L_{pad}$ Bits mit einem vom Empfänger überprüfbaren Wert PAD belegt werden, bspw. einem festen Wert, bspw. einer Folge von 0-Bits, oder mit einem aus der Klartextnachricht ableitbaren Wert, bspw. den letzten $L_{pad}$ Bits des mit Hilfe von $HASH_{K\_H}$ gebildeten Hashwerts der ursprünglichen kompletten Klartextnachricht, also der kompletten Klartextnachricht ohne die eingefügten PAD-Bits. Nach der Entschlüsselung kann dann festgestellt werden, ob der Wert PAD' der in der entschlüsselten Nachricht an der bekannten Position stehenden Bitfolge dem erwarteten Wert PAD entspricht, der dem Empfänger bekannt ist oder aus der entschlüsselten Nachricht nach Entfernung der PAD'-Bits abgeleitet wird. Ist das nicht der Fall, kann davon ausgegangen werden, dass die Nachricht manipuliert worden ist.

Ein Nachteil des vorgeschlagenen Verschlüsselungsverfahrens ist, dass der erste Klartextblock einerseits erst am Ende des Entschlüsselungsvorgangs entschlüsselt wird und damit die in ihm enthaltenen Informationen auch erst nach dem Ende des kompletten Entschlüsselungsvorgangs genutzt werden können. Andererseits muss dieser Block zuerst übertragen werden, denn ohne ihn ist die Entschlüsselung des Rests des Chiffretextes nicht möglich. Somit kann die im zuerst übertragenen Klartextblock $PB_1$ enthaltene Information erst nach Abschluss des Entschlüsselungsvorgangs genutzt werden, was ein Nachteil sein kann, der jedoch wegen der anvisierten kurzen Nachrichten nicht schwer ins Gewicht fallen dürfte. Um diesen Nachteil weiter abzuschwächen, sollte der erste Block nach Möglichkeit Informationen enthalten, die während des Entschlüsselungsvorgangs nicht benötigt werden. Somit ist die Auswahl der zum ersten Klartextblock gehörenden Informationen durch die beiden ggf. zueinander in Spannung stehenden Forderungen bestimmt, der Forderung der "minimalen Entropie" und der Forderung der "nicht-dringlichen Nutzung".

Wie oben mehrfach angedeutet, ist bei der Verwendung eines ggf. nicht neuartigen Initialisierungsvektors der CBC-Betriebsmodus in vielen Situationen sicherer als bspw. die längenerhaltenden CFB-, OFB- und CTR-Betriebsmodi, weil ein im CBC-Betriebsmodus wiederholt verwendeter Initialisierungsvektor i.d.R. nicht zur Offenlegung des Chiffretextes führt, was bspw. bei CTR in gängigen oft vorkommenden Konstellationen der Fall ist. Deswegen bietet es sich an, für das vorgeschlagene Verfahren, das die Wahrscheinlichkeit für die Neuartigkeit eines Initialisierungsvektors erhöhen kann, diese aber im allgemeinen Fall nicht garantiert, als Betriebsmodus OM der Blockchiffre E CBC zu verwenden. Der große Nachteil des klassischen CBC-Betriebsmodus ist aber, dass er nur ganze Blöcke verschlüsseln kann, wodurch unvollständige Blöcke durch ein Padding vervollständigt werden müssen, was sich ungünstig auf die Länge des erzeugten Chiffretextes und damit die Länge der zu übertragenden Nachricht auswirkt.

Der CBC-Betriebsmodus kann jedoch mit dem CTS-Modus ("Ciphertext Stealing") auf bekannte Weise kombiniert werden, wodurch auch bei der Verwendung des CBC-Betriebsmodus eine der Klartextlänge gleiche Chiffretextlänge erreicht wird. Der CTS-Modus lässt sich nur auf Klartexte, die länger als die Blockgröße der verwendeten Blockchiffre E, also länger als $L_E$, sind, anwenden. Ist die Länge des zu verschlüsselnden Klartextes PT größer als $L_E$, lässt sich das beschriebene Verschlüsselungsverfahren mit dem CBC-CTS-Modus kombinieren. Durch die Verwendung von CBC wird das beschriebene Verfahren robust gegen ggf. nicht neuartige Initialisierungsvektoren, durch die Verwendung von CTS übersteigt die Länge des Chiffretextes nicht die Länge des Klartextes. Daher wird vorgeschlagen, beim beschriebenen Verfahren als Betriebsmodus OM den CBC-CTS-Betriebsmodus zu nutzen.

In manchen Situationen ist es sinnvoll, den übertragenen Initialisierungsvektor zu verschlüsseln, bspw. um dem Angreifer die Analyse der abgefangenen Nachrichten zu erschweren. Es wird vorgeschlagen, vor dem Versenden der Nachricht $M_C$ den ersten Block $CB_1$ noch einmal zu verschlüsseln, also statt bspw. der Nachricht $M_C = CB_1 \| CT^{OM} \| AD$ die Nachricht $M_{CC} = CCB_1 \| CT^{OM} \| AD$ zu versenden, wobei $CCB_1 := E^{RAW}_{K\_IV}(CB_1)$ für einen dem Sender und dem Empfänger gleichermaßen bekannten geheimen symmetrischen Schlüssel K_IV der Bitlänge $L_E$. Nach dem Empfang der Nachricht $M_{CC}' = CCB_1' \| CT^{OM'} \| AD'$ wird im ersten Schritt der erste Block $CCB_1'$ mit K_IV entschlüsselt, also $CB_1':= D^{RAW}_{K\_IV}(CCB_1')$ und anschließend die Nachricht $M_C':= CB_1' \| CT^{OM'} \| AD'$ nach dem oben beschriebenen Verfahren entschlüsselt.

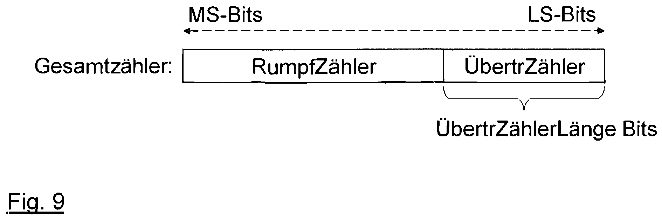

In der DE 10 2021 001 095 A1 wird ein zählerbasiertes Verfahren zum Erkennen ausgefallener und wiedereingespielter kurzer Nachrichten sowie zum Schutz vor Replay-Attacken vorgeschlagen. Dabei wird insb. vorgeschlagen, vom Sender (S) und vom Empfänger (E) einen synchronen beim Versenden bzw. Empfangen einer jeden neuen Nachricht M um eins zu inkrementierenden Zähler fester Bitlänge S.GesZähler bzw. E.GesZähler zu führen und diesen Zähler in zwei Teile fester Bitlängen einzuteilen, einen Rumpfzähler RumpfZähler und einen nachfolgenden Übertragungszähler ÜbertrZähler, so dass S.GesZähler = S.RumpfZähler || S.ÜbertrZähler und E.GesZähler = E.RumpfZähler || E.Übertr-Zähler, wobei die Bitlänge des ÜbertrZähler mit ÜbertrZählerLänge bezeichnet wird. Des Weiteren wird darin vorgeschlagen, nur den ÜbertrZähler-Anteil mit jeder Nachricht M als M.ÜbertrZähler zu übertragen und den Gesamtzähler E.GesZähler auf Seiten des Empfängers nach dem in DE 10 2021 001 095 A1 beschriebenen Verfahren aus E.Rumpf-Zähler und M'.ÜbertrZähler zu rekonstruieren. (vgl. Figur 9)

Soll nun ein gewisser Anteil der den M.ÜbertrZähler enthaltenden Nachricht M verschlüsselt werden, so liegt es nahe, um für jede Nachricht einen neuartigen Initialisierungsvektor zu bekommen aber trotzdem Platz in der Nachricht zu sparen, den Gesamtzähler S.GesZähler zur Bildung des Initialisierungsvektors heranzuziehen, bspw. einen pseudozufälligen Initialisierungsvektor aus S.GesZähler auf eine sichere Weise abzuleiten, bspw. indem der eine Blockgröße lange Wert $S.IV := LA(HASH_{(K\_H)}(S.GesZähler))$ vom Sender als Initialisierungsvektor für die Verschlüsselung verwendet wird. Falls der Sender den S.ÜbertrZähler als Teil der Nachricht M, also als M.ÜbertrZähler, mitsendet, kann der Empfänger nach dem Empfang der Nachricht den bei der Verschlüsselung verwendeten Initialisierungsvektor als $E.IV := LA(HASH_{(K\_H)}(E.RumpfZähler || M'.ÜbertrZähler))$ rekonstruieren, da S.RumpfZähler = E.RumpfZähler beiden Seiten implizit vorliegt. Diese Vorgehensweise funktioniert jedoch nur, wenn M.ÜbertrZähler im Klartext übertragen wird. Soll M.ÜbertrZähler hingegen verschlüsselt übertragen werden, funktioniert der konventionelle Ansatz nicht mehr, da in diesem Fall der Empfänger den Wert des Übertragungszählers der Nachricht nicht unmittelbar, insb. nicht bevor M' entschlüsselt worden ist, entnehmen kann.

In diesem Fall kann das in dieser Schrift vorgeschlagene Verfahren vorteilhaft eingesetzt werden, weil auf diese Weise erreicht werden kann, dass die Kombination des Initialisierungsvektors mit dem ersten Block des zu verschlüsselnden Klartextes mit hoher Wahrscheinlichkeit neuartig ist, M.ÜbertrZähler als Teil des verschlüsselten Anteils der Nachricht M übertragen wird und trotzdem vom Sender eine Entschlüsselung des Chiffretextes CT durchgeführt werden kann. Dazu wird S.ÜbertrZähler in den ersten Klartextblock $PB_1$ der Nachricht M aufgenommen, was wegen in der Praxis immer geltendem ÜbertrZählerLänge $< L_E$ immer möglich sein sollte, und aus dem beiden Seiten bekannten Zähleranteil S.RumpfZähler = E.RumpfZähler wird auf eine sichere Weise, bspw. mit durch $S.Impl_u := LA(HASH_{K\_H}(S.RumpfZähler))$, ein pseudozufälliger Wert für $S.Impl_u$ bestimmt, der in Kombination mit dem den S.ÜbertrZähler enthaltenden ersten Klartextblock $PB_1$ eine einmalige, insb. neuartige, Kombination bildet. Abschließend wird die Nachricht M nach dem vorgeschlagenen Verfahren mit einem symmetrischen Schlüssel K unter Verwendung von $S.Impl_u$ verschlüsselt. Dabei garantiert die Neuartigkeit des Gesamtzählers S.GesZähler = S.RumpfZähler || S.ÜbertrZähler, dass die Kombination aus dem aus S.RumpfZähler abgeleiteten Wert $S.Impl_u$ und dem den Zähleranteil S.ÜbertrZähler enthaltenden ersten Klartextblock $PB_1$ mit sehr hoher Wahrscheinlichkeit einmalig, also neuartig, ist.

**Patentansprüche**

**1.** Verfahren zur Verschlüsselung eines Klartextes mit einer Blockchiffre E der Blockgröße $L_E$ unter Verwendung eines symmetrischen Schlüssels K, wobei für die Verschlüsselung von Teilen des oder des ganzen restlichen Klartextes mit der Blockchiffre E ein Initialisierungsvektor (IV) verwendet wird, wobei dafür ein beliebiger einen Initialisierungsvektor (IV) verlangender Betriebsmodus genutzt wird,
**dadurch gekennzeichnet, dass**

eine Fingerprint-Funktion ($FP_u$) zum Einsatz kommt, welche den beiden Forderungen genügt, dass aus zwei ungleichen Bitfolgen (BF1 ≠ BF2) mit einer mit für die Anwendung ausreichend hohen Wahrscheinlichkeit folgt, dass auch die Ergebnisse der Anwendung der Fingerprint-Funktion ($FP_u$) auf diese Bitfolgen ungleich sind ($FP_u(BF1) \neq FP_u(BF2)$), und dass zu der Fingerprint-Funktion ($FP_u$) eine Fingerprint-Umkehrfunktion ($FP_u^{-1}$) existiert, so dass stets gilt:

$$FP_u^{-1}(FP_u(BF) || BF[u+1..L(BF)]) = BF[1..u],$$

wobei u und $L_E$ nicht zwingend gleich sein müssen, und eine allgemeine Chiffre EGen verwendet wird, indem die Fingerprint-Funktion auf die Konkatenation der kompletten ersten u Bits $PB_1^u$ des Klartextes und ausgewählter oder aller Bits FPInput des restlichen Klartextes angewendet wird, und anschließend der erste Block des

Chiffretextes $CB_1$ durch EGen-Verschlüsselung des u Bit langen Ergebnisses $FP_u$ ($PB^u_1$ || FPInput) berechnet wird, also $CB_1 := EGen(FP_u$ ($PB^u_1$ || FPInput)), und die so erzeugte Verschlüsselung der ersten u Bits des Klartextes $CB_1$ als Initialisierungsvektor IV := $CB_1$ verwendet wird.

**2.** Verfahren nach Anspruch 1,
**dadurch gekennzeichnet, dass**
als Fingerprint-Funktion $FP_u$ eine Fingerprint-Funktion

$$FP^{Tag\_u,\ Scramble\_u}(BF) := Scramble_u\ (BF[1..u]) \oplus Tag_u(BF[u + 1..L(BF)])$$

genutzt wird, wobei $Tag_u$ eine Funktion ist, die zu Bitfolgen BF beliebiger Länge einen mit einer für die vorgesehene Anwendung ausreichend hohen Wahrscheinlichkeit eindeutigen Wert der Länge u berechnet, wobei $Scramble_u$ eine umkehrbare Funktion ist, die Bitfolgen (BF) der Länge u auf Bitfolgen (BF) der Länge u abbildet, und wobei $\oplus$ für eine bitweise XOR Verknüpfung zweier Bitfolgen (BF) mit gleicher Länge steht.

**3.** Verfahren nach Anspruch 2,
**dadurch gekennzeichnet, dass**
als die Funktion $Tag_U$ eine kryptographische Hashfunktion genutzt wird, deren Hashwert auf die Länge u auf sichere Weise angepasst wird.

**4.** Verfahren nach Anspruch 2 oder 3,
**dadurch gekennzeichnet, dass**
die Funktion $Tag_u$ die Eigenschaft der Nicht-Umkehrbarkeit besitzt und/oder nach mindestens einer Art kollisionsresistent ist.

**5.** Verfahren nach einem der Ansprüche 2 bis 4,
**dadurch gekennzeichnet, dass**
als die Funktion $Tag_u$ eine schlüssellose oder schlüsselabhängige kryptographische Hashfunktion $HASH_{(K\_H)}$ genutzt wird

**6.** Verfahren nach einem der Ansprüche 1 bis 5,
**dadurch gekennzeichnet, dass**

die Verschlüsselung $M_C$ einer aus $PB^u_1$, $PT^{OM}_1$, $PT^{OM}_2$, AD bestehenden Klartextnachricht
$M_P = PB^u_1$ || $PT^{OM}_1$ || $PT^{OM}_2$ || AD in Abhängigkeit von den beiden impliziten nicht zur Nachricht gehörenden Bitfolgen ImplAD und $Impl_u$ unter Einsatz einer allgemeinen längenerhaltenden Chiffre EGen und einer Blockchiffre E wie folgt definiert ist:

$$E^{FP,\ EGen,\ OM,\ OM\text{-}NB}{}_K(PB^u_1,\ PT^{OM}_1,\ PT^{OM}_2,\ AD,\ ImplAD,\ Impl_u) :=$$

$$CB^u_1 \;||\; E^{OM}{}_K(OM\text{-}NB(CB^u_1),\ PT^{OM}_1 \;||\; PT^{OM}_2)$$

mit

$$CB^u_1 := EGen(FP_u(PB^u_1 \;||\; PT^{OM}_2 \;||\; AD \;||\; ImplAD) \oplus Impl_u)$$

und die die Entschlüsselung $M_P$' einer aus $CB^u_1$', $CT^{OM'}$, AD' bestehenden Chiffretextnachricht $M_C$' = $CB^u_1$' || $CT^{OM'}$ || AD' in Abhängigkeit von den beiden impliziten nicht zur Nachricht gehörenden Bitfolgen ImplAD' und $Impl_u$' wie folgt definiert ist:

$$D^{FP,\ DGen,\ OM,\ OM\text{-}NB}{}_K(CB^u_1{}',\ CT^{OM'},\ AD',\ L_{PT1},\ ImplAD',\ Impl_u') :=$$

$$FP_u{}^{-1}\ ((DGen(CB^u_1{}') \oplus Impl_u') \;||\; PT^{OM'}[L_{PT1}+1..L(PT^{OM'})] \;||\; AD \;||\; ImplAD') \;||\; PT^{OM'}$$

mit

$$PT^{OM'} := D^{OM}_K(OM\text{-}NB(CB^u_1{}'), CT^{OM'})$$

**7.** Verfahren nach einem der Ansprüche 1 bis 6,
**dadurch gekennzeichnet, dass**
bei dem Verschlüsselungsverfahren als Fingerprint-Funktion $FP_u$ eine der Fingerprint-Funktionen $FP_u^{HASH(K\_H),\ ID}$ oder $FP^{HASH(K\_H),\ E\text{-}K\_S}$ verwendet wird.

**8.** Verfahren nach einem der Ansprüche 1 bis 7
**dadurch gekennzeichnet, dass**
bei dem Verschlüsselungsverfahren als allgemeine Chiffre EGen die E-Raw-Verschlüsselung einer Blockchiffre E der Blockgröße $L_E = u$ unter Verwendung eines symmetrischen $L_E$ Bit langen Schlüssels K, also $E^{RAW}_K$, verwendet wird.

**9.** Verfahren nach einem der Ansprüche 6 bis 8,
**dadurch gekennzeichnet, dass**

die Verschlüsselung $M_C$ einer aus $PB_1$, $PT^{OM}_1$, $PT^{OM}_2$, AD bestehenden Klartextnachricht
$M_P = PB_1 \parallel PT^{OM}_1 \parallel PT^{OM}_2 \parallel AD$ mit $L(PB_1) = L_E$ in Abhängigkeit von den beiden impliziten nicht zur Nachricht gehörenden Bitfolgen ImplAD und $Impl_u$ unter Einsatz einer Blockchiffre E mit Blockgröße $L_E = u$ wie folgt definiert ist:

$$E^{FP,\ E\text{-}Raw,\ OM,\ OM\text{-}NB}_K(PB_1, PT^{OM}_1, PT^{OM}_2,\ AD, ImplAD, Impl_u) :=$$

$$CB_1 \parallel E^{OM}_K(OM\text{-}NB(CB_1), PT^{OM}_1 \parallel PT^{OM}_2)$$

mit

$$CB_1 := E^{RAW}_K(FP(PB_1 \parallel PT^{OM}_2 \parallel AD \parallel ImplAD) \oplus Impl_u)$$

und die Entschlüsselung $M_P$' einer aus $CB_1$', $CT^{OM'}$, AD' bestehenden Chiffretextnachricht $M_C$' = $CB_1$' $\parallel CT^{OM'} \parallel$ AD' mit $L(CB_1') = L_E$ in Abhängigkeit von $L_{PT1}$ und den beiden impliziten nicht zur Nachricht gehörenden Bitfolgen ImplAD' und $Impl_u$' unter Einsatz einer Blockchiffre E mit Blockgröße $L_E = u$ wie folgt definiert ist:

$$D^{FP,\ D\text{-}Raw,\ OM,\ OM\text{-}NB}_K(CB_1{}', CT^{OM'},\ AD', L_{PT1}, ImplAD', Impl_u{}') :=$$

$$FP^{-1}((D^{RAW}_K(CB_1{}') \oplus Impl_u{}') \parallel PT^{OM'}[L_{PT1}+1..L(PT^{OM'})] \parallel AD \parallel ImplAD') \parallel PT^{OM'}$$

mit

$$PT^{OM'} := D^{OM}_K(OM\text{-}NB(CB^u_1{}'), CT^{OM'})$$

**10.** Verfahren nach Anspruch 8 oder 9,
**dadurch gekennzeichnet, dass**
der CBC-Betriebsmodus als Operationsmodus OM verwendet wird, auf das Padding der außerhalb des ersten Blocks liegenden Blöcke verzichtet wird und stattdessen der CTS-Betriebsmodus in Kombination mit dem CBC-Betriebsmodus angewendet wird.

**11.** Verfahren nach einem der Ansprüche 1 bis 10,
**dadurch gekennzeichnet, dass**
falls $L(CB_1) = L_E$, vor dem Versenden der Nachricht $M_C$ der erste Block $CB_1$ noch einmal verschlüsselt wird.

**12.** Verfahren zur Verschlüsselung eines Klartextes mit einer Blockchiffre E der Blockgröße $L_E$ unter Verwendung eines symmetrischen Schlüssels K,
**dadurch gekennzeichnet, dass**

als Fingerprint-Funktion ($FP_u$) eine Fingerprint-Funktion $FP^{Tag\_u,Scramble\_u}(BF) := Scramble_u(BF[1..u]) \oplus Tag_u(BF[u+1..L(BF)])$ genutzt wird, wobei $Tag_u$ eine Funktion ist, die zu Bitfolgen BF beliebiger Länge einen mit einer für die vorgesehene Anwendung ausreichend hohen Wahrscheinlichkeit eindeutigen Wert der Länge u berechnet, wobei Scramble$_u$ eine umkehrbare Funktion ist, die Bitfolgen (BF) der Länge u auf Bitfolgen (BF) der Länge u abbildet, und wobei $\oplus$ für eine bitweise XOR Verknüpfung zweier Bitfolgen (BF) mit gleicher Länge steht, und wobei

im Falle der Sicherstellung der Neuartigkeit der in die Tag$_u$-Funktion der Fingerprint-Funktion FP$^{Tag\_u, Scramble\_u}$ eingehenden Bitfolge für jede neue Nachricht eine sichere schlüsselabhängige Hashfunktion HASH$_{K\_H}$ als Basis für die Tag$_u{}^{K\_H}$-Funktion einer Fingerprint-Funktion FP$_u{}^{K\_H}$ verwendet wird, auf die zusätzliche Verschlüsselung der ersten u Bits des Klartextes mittels EGen verzichtet wird und stattdessen als die Verschlüsselung der ersten u Bits CB$^u{}_1$ direkt der FP$_u{}^{K\_H}$-Fingerprint verwendet wird.

**13.** Verfahren nach einem der Ansprüche 1 bis 12
**dadurch gekennzeichnet, dass**
das Format des Klartextes PT so gestaltet wird, dass der erste Klartextblock PB$_1$ möglichst vorhersagbare, insbesondere starken Konsistenzregeln gehorchende, eine maximal mögliche Redundanz aufweisende Informationen enthält, die Einhaltung dieser Konsistenzregeln nach der Entschlüsselung der Nachricht vom Empfänger überprüft wird und bei einer Feststellung der Verletzung einer der Konsistenzregeln eine Ausnahmebehandlung eingeleitet wird.

**14.** Verfahren nach einem der Ansprüche 1 bis 13,
**dadurch gekennzeichnet, dass**
als die Funktion Scramble$_u$ eine Identitätsfunktion oder eine längenerhaltende Verschlüsselungsfunktion genutzt wird, wobei im Falle der Verschlüsselung die zur Verschlüsselung passende Entschlüsselungsfunktion als Umkehrfunktion genutzt wird.

**15.** Verfahren nach Anspruch 14,
**dadurch gekennzeichnet, dass**
für eine Blockchiffre E mit Blockgröße L$_E$ = u und einen L$_E$ Bit langen symmetrischen Schlüssel K_S als die Funktion Scramble$_u$ die E-Raw-Verschlüsselung mit K_S, also E$^{RAW}{}_{K\_S}$, genutzt wird.

**16.** Verfahren nach einem der Ansprüche 14 oder 15,
**dadurch gekennzeichnet, dass**
die Länge des Initialisierungsvektors IV abhängig von gewähltem Betriebsmodus und/oder abhängig von der Länge von CB$_1$ angepasst wird.

**17.** Verfahren nach einem der Ansprüche 1 bis 16,
**dadurch gekennzeichnet, dass**
die Verschlüsselung für einen Klartext genutzt wird, welcher zumindest (u+1) Bit lang ist.

## Claims

**1.** Method for encrypting plaintext by means of a block cipher E of block size L$_E$ using a symmetric key K, wherein an initialization vector (IV) is used for encrypting parts of the or all of the remaining plaintext by means of the block cipher E, wherein any operating mode requiring an initialization vector (IV) is used for this purpose,
**characterized in that**

a fingerprint function (FP$_u$) is used which meets the two requirements that
from two unequal bit sequences (BF1 $\neq$ BF2), it follows, with a sufficiently high probability for the application, that the results of the application of the fingerprint function (FP$_u$) to these bit sequences are also unequal (FP$_u$(BF1) $\neq$ FP$_u$(BF2)), and that
a fingerprint inverse function (FP$_u{}^{-1}$) of the fingerprint function (FP$_u$) exists, such that the following always applies:

$$FP_u{}^{-1}(FP_u\,(BF)\,\|\,BF[u+1..L(BF)]) = BF[1..u],$$

where u and L$_E$ do not necessarily have to be equal, and a general cipher EGen is used by applying the fingerprint function to the concatenation of the complete first u bits PB$^u{}_1$ of the plaintext and selected or all bits FPInput of the remaining plaintext, and subsequently, the first block of the ciphertext CB$_1$ is calculated by EGen encryption of the u-bit long result $FP_u(PB^u_1 \| FPInput)$, i.e. $CB_1 := EGen(FP_u(PB^u_1 \| FPInput))$, and the encryption of the first u bits of the plaintext $CB_1$ generated in this way is used as the initialization vector $IV := CB_1$.

2. Method according to claim 1,
   **characterized in that**
   a fingerprint function
   $FP^{Tag\_u, Scramble\_u}(BF) := Scramble_u(BF[1..u]) \oplus Tag_u(BF[u+1..L(BF)])$ is used as the fingerprint function $FP_u$, where $Tag_u$ is a function that calculates, with a sufficiently high probability for the intended application, a unique value of length u for bit sequences BF of any length, where $Scramble_u$ is an invertible function that maps bit sequences (BF) of length u to bit sequences (BF) of length u, and where $\oplus$ represents a bitwise XOR operation of two bit sequences (BF) of equal length.

3. Method according to claim 2,
   **characterized in that**
   a cryptographic hash function is used as the function $Tag_U$, the hash value of which is securely adjusted to the length u.

4. Method according to claim 2 or 3,
   **characterized in that**
   the function $Tag_u$ has the property of being non-invertible and/or is collision-resistant in at least one way.

5. Method according to any of claims 2 to 4,
   **characterized in that**
   a keyless or key-dependent cryptographic hash function $HASH_{(K\_H)}$ is used as the function $Tag_u$

6. Method according to any of claims 1 to 5,
   **characterized in that**

   the encryption Mc of a plaintext message $M_P = PB^u_1 \| PT^{OM}_1 \| PT^{OM}_2 \| AD$ consisting of $PB^u_1$, $PT^{OM}_1$, $PT^{OM}_2$, AD, depending on the two implicit bit sequences ImplAD and $Impl_u$ that do not belong to the message, using a general length-preserving cipher EGen and a block cipher E, is defined as follows:

$$E^{FP, EGen, OM, OM\text{-}NB}{}_K(PB^u_1, PT^{OM}_1, PT^{OM}_2, AD, ImplAD, Impl_u) :=$$

$$CB^u_1 \| E^{OM}{}_K(OM\text{-}NB(CB^u_1), PT^{OM}_1 \| PT^{OM}_2)$$

   with

$$Cb^u_1 := EGen(FP_u(PB^u_1 \| PT^{OM}_2 \| AD \| ImplAD) \oplus Impl_u)$$

   and the decryption $M_P'$ of a ciphertext message $Mc' = CB^u_1{}' \| CT^{OM}{}' \| AD'$ consisting of $CB^u_1{}'$, $CT^{OM}{}'$, $AD'$, depending on the two implicit bit sequences ImplAD' and $Impl_u'$ not belonging to the message, is defined as follows:

$$D^{FP, DGen, OM, OM\text{-}NB}{}_K(CB^u_1{}', CT^{OM}{}', AD', L_{PT1}, ImplAD', Impl_u') :=$$

$$FP_u{}^{-1}((DGen(CB^u_1{}') \oplus Impl_u') \| PT^{OM}{}'[L_{PT1}+1..L(PT^{OM}{}')] \| AD \| ImplAD') \| PT^{OM}{}'$$

   with

$$PT^{OM}{}' := D^{OM}{}_K(OM\text{-}NB(CB^u_1{}'), CT^{OM}{}')$$

7. Method according to any of claims 1 to 6,
   **characterized in that,**
   in the encryption method, one of the fingerprint functions $FP_u{}^{HASH(K\_H), ID}$ or $FP^{HASH(K\_H), E\text{-}K\_S}$ is used as the

fingerprint function $FP_u$.

8. Method according to any of claims 1 to 7,
   **characterized in that**
   in the encryption method, the E-Raw encryption of a block cipher E of block size $L_E = u$ using a symmetric $L_E$ bit long key K, i.e. $E^{RAW}_K$, is used as the general cipher EGen.

9. Method according to any of claims 6 to 8,
   **characterized in that**

   the encryption Mc of a plaintext message $M_P = PB_1 \| PT^{OM}_1 \| PT^{OM}_2 \| AD$ consisting of $PB_1$, $PT^{OM}_1$, $PT^{OM}_2$, AD with $L(PB_1) = L_E$, depending on the two implicit bit sequences ImplAD and $Impl_u$ that do not belong to the message, using a block cipher E with block size $L_E = u$, is defined as follows:

   $$E^{FP, \text{E-Raw, OM, OM-NB}}_K(PB_1, PT^{OM}_1, PT^{OM}_2, AD, ImplAD, Impl_u) :=$$

   $$CB_1 \| E^{OM}_K(OM\text{-}NB(CB_1), PT^{OM}_1 \| PT^{OM}_2)$$

   with

   $$CB_1 := E^{RAW}_K(FP(PB_1 \| PT^{OM}_2 \| AD \| ImplAD) \oplus Impl_u)$$

   and the decryption $M_P$' of a ciphertext message Mc' = $CB_1$' $\| CT^{OM}$' $\| AD$' consisting of $CB_1$', $CT^{OM}$', $AD$', with $L(CB_1') = L_E$, depending on $L_{PT1}$ and the two implicit bit sequences ImplAD' and $Impl_u$' that do not belong to the message, using a block cipher E with block size $L_E = u$, is defined as follows:

   $$D^{FP, \text{D-Raw, OM, OM-NB}}_K(CB_1', CT^{OM'}, AD', L_{PT1}, ImplAD', Impl_u') :=$$

   $$FP^{-1}((D^{RAW}_K(CB_1') \oplus Impl_u') \| PT^{OM'}[L_{PT1}+1..L(PT^{OM'})] \| AD \| ImplAD') \| PT^{OM'}$$

   with

   $$PT^{OM'} := D^{OM}_K(OM\text{-}NB(CB^u_1'), CT^{OM'})$$

10. Method according to claim 8 or 9,
    **characterized in that**
    the CBC operating mode is used as the operation mode OM, the padding of the blocks outside of the first block is dispensed with and, instead, the CTS operating mode is used in combination with the CBC operating mode.

11. Method according to any of claims 1 to 10,
    **characterized in that**
    if $L(CB_1) = L_E$, the first block $CB_1$ is encrypted again before sending the message Mc.

12. Method for encrypting plaintext by means of a block cipher E of block size $L_E$ using a symmetric key K,
    **characterized in that**

    a fingerprint function
    $FP^{Tag\_u, Scramble\_u}(BF) := Scramble_u(BF[1..u]) \oplus Tag_u(BF[u + 1..L(BF)])$ is used as the fingerprint function ($FP_u$), where $Tag_u$ is a function that calculates, with a sufficiently high probability for the intended application, a unique value of length u for bit sequences BF of any length, where $Scramble_u$ is an invertible function that maps bit sequences (BF) of length u to bit sequences (BF) of length u, and where $\oplus$ represents a bitwise XOR operation of two bit sequences (BF) of equal length, and wherein
    in the case of ensuring the novelty of the bit sequence entering the $Tag_u$-function of the fingerprint function $FP^{Tag\_u, Scramble\_u}$, a secure, key-dependent hash function $HASH_{K\_H}$ is used as the basis for the $Tag_u^{K\_H}$-function

of a fingerprint function $FP_u{}^{K\_H}$, the additional encryption of the first u bits of the plaintext by means of Egen is dispensed with and, instead, the $FP_u{}^{K\_H}$-fingerprint is used directly as the encryption of the first u bits $CB^u{}_1$.

13. Method according to any of claims 1 to 12,
**characterized in that**
the format of the plaintext PT is designed such that the first plaintext block $PB_1$ contains information that is as predictable as possible, in particular obeying strict consistency rules and having the maximum possible redundancy, compliance with these consistency rules is checked by the recipient after the message has been decrypted, and if a violation of one of the consistency rules is detected, exception handling is initiated.

14. Method according to any of claims 1 to 13,
**characterized in that**
an identity function or a length-preserving encryption function is used as the function $Scramble_u$, wherein, in the case of encryption, the decryption function matching the encryption is used as the inverse function.

15. Method according to claim 14,
**characterized in that**
for a block cipher E with block size $L_E = u$ and for an $L_E$ bit long symmetric key K_S, the E-Raw encryption with K_S, i.e. $E^{RAW}{}_{K\_S}$, is used as the function $Scramble_u$.

16. Method according to either claim 14 or claim 15,
**characterized in that**
the length of the initialization vector IV is adjusted depending on the selected operating mode and/or on the length of $CB_1$.

17. Method according to any of claims 1 to 16,
**characterized in that**
the encryption is used for plaintext that is at least (u+1) bits long.

## Revendications

1. Procédé permettant le chiffrement d'un texte en clair avec un chiffrement par bloc E de la taille de bloc $L_E$ à l'aide d'une clé symétrique K, dans lequel un vecteur d'initialisation (IV) est utilisé pour le chiffrement de parties ou de la totalité du texte en clair restant avec le chiffrement par bloc E, dans lequel un mode de fonctionnement quelconque exigeant un vecteur d'initialisation (IV) est utilisé à cet effet,
**caractérisé en ce**

**qu**'une fonction d'empreinte digitale ($FP_u$) est employée, qui satisfait aux deux exigences suivantes
**qu**'à partir de deux séquences de bits inégales (BF1 ≠ BF2), il s'ensuit avec une probabilité suffisamment élevée pour l'application que les résultats de l'application de la fonction d'empreinte digitale ($FP_u$) à ces séquences de bits sont également inégaux ($FP_u$(BF1) ≠ $FP_u$(BF2)), **et**
**qu**'il existe une fonction inverse d'empreinte digitale ($FP_u{}^{-1}$) pour la fonction d'empreinte digitale ($FP_u$), de sorte qu'il est toujours valable :

$$FP_u{}^{-1}(FP_u\,(BF) \,\|\, BF[u+1..L(BF)]) = BF[1..u],$$

où u et $L_E$ ne doivent pas nécessairement être égaux, et un chiffrement général EGen est utilisé en appliquant la fonction d'empreinte digitale à la concaténation des premiers bits u complets $PB^u{}_1$ du texte en clair et de bits sélectionnés ou de tous les bits FPInput du texte en clair restant, puis en calculant le premier bloc du texte chiffré $CB_1$ par chiffrement EGen du résultat de u bits $FP_u$($PB^u{}_1 \| FPInput$), soit $CB_1 := EGen(FP_u(PB^u{}_1 \| FPInput))$, et le chiffrement des u premiers bits du texte en clair $CB_1$ ainsi généré est utilisé comme vecteur d'initialisation IV := $CB_1$.

2. Procédé selon la revendication 1,
**caractérisé en ce que**

comme fonction d'empreinte digitale $FP_u$ une fonction d'empreinte digitale

$$FP^{Tag\_u,\ Scramble\_u}\ (BF) := Scramble_u\ (BF[1..u]) \oplus Tag_u(BF[u + 1..L(BF)])$$

est utilisée, où $Tag_u$ est une fonction qui calcule pour des séquences de bits BF de longueur quelconque une valeur de longueur u univoque avec une probabilité suffisamment élevée pour l'application prévue, où $Scramble_u$ est une fonction réversible qui reproduit des séquences de bits (BF) de longueur u sur des séquences de bits (BF) de longueur u, et où $\oplus$ représente une combinaison XOR bit par bit de deux séquences de bits (BF) de même longueur.

3.  Procédé selon la revendication 2,
    **caractérisé en ce**
    **qu'**une fonction de hachage cryptographique dont la valeur de hachage est adaptée à la longueur u de manière sûre est utilisée comme fonction $Tag_U$.

4.  Procédé selon la revendication 2 ou 3,
    **caractérisé en ce que**
    la fonction $Tag_u$ possède la propriété de non-réversibilité et/ou est résistante aux collisions selon au moins un type.

5.  Procédé selon l'une des revendications 2 à 4,
    **caractérisé en ce**
    **qu'**une fonction de hachage cryptographique sans clé ou dépendant d'une clé $HASH_{(K\_H)}$ est utilisée comme fonction $Tag_u$

6.  Procédé selon l'une des revendications 1 à 5,
    **caractérisé en ce que**

    le chiffrement Mc d'un message en texte en clair composé de $PB^u_1$, $PT^{OM}_1$, $PT^{OM}_2$, AD
    $M_P = PB^u_1 \parallel PT^{OM}_1 \parallel PT^{OM}_2 \parallel AD$ en fonction des deux séquences de bits implicites n'appartenant pas au message, ImplAD et $Impl_u$, en utilisant un chiffrement général de maintien de longueur EGen et un chiffrement par bloc E, est défini comme suit :

    $$E^{FP,\ EGen,\ OM,\ OM\text{-}NB}_K(PB^u_1, PT^{OM}_1, PT^{OM}_2, AD, ImplAD, Impl_u) :=$$

    $$CB^u_1 \parallel E^{OM}_K(OM\text{-}NB(CB^u_1), PT^{OM}_1 \parallel PT^{OM}_2)$$

    avec

    $$CB^u_{1\ :=} EGen(FP_u(PB^u_1 \parallel PT^{OM}_2 \parallel AD \parallel ImplAD) \oplus Impl_u)$$

    et le déchiffrement Mp 'd'un message en texte chiffré composé de $CB^u_1$', $CT^{OM}$', AD'$M_C$' = $CB^u_1$'$\parallel CT^{OM}$'$\parallel$ AD' en fonction des deux séquences de bits implicites ImplAD' et $Impl_u$' n'appartenant pas au message, est défini comme suit :

    $$D^{FP,\ DGen,\ OM,\ OM\text{-}NB}_K(CB^u_1{'}, CT^{OM}{'}, AD{'}, L_{PT1}, ImplAD{'}, Impl_u{'}) :=$$

    $$FP_u^{-1}\ ((DGen(CB^u_1{'}) \oplus Impl_u{'}) \parallel PT^{OM}{'}[L_{PT1}+1..L(PT^{OM}{'})] \parallel AD \parallel ImplAD{'}) \parallel$$

    $$PT^{OM}{'}$$

    avec

    $$PT^{OM}{'} := D^{OM}_K(OM\text{-}NB(CB^u_1{'}), CT^{OM}{'})$$

7. Procédé selon l'une des revendications 1 à 6,
**caractérisé en ce que**
dans le procédé de chiffrement, l'une des fonctions d'empreinte digitale $FP_u^{HASH(K\_H),\ ID}$ ou $FP^{HASH(K\_H),\ E-K\_S}$ est utilisée comme fonction d'empreinte digitale $FP_u$.

8. Procédé selon l'une des revendications 1 à 7
**caractérisé en ce que**
dans le procédé de chiffrement, le chiffrement E-Raw d'un chiffrement par bloc E de taille de bloc $L_E = u$ est utilisé comme chiffrement général EGen à l'aide d'une clé symétrique K de longueur $L_E$ bits, c'est-à-dire $E^{RAW}_K$.

9. Procédé selon l'une des revendications 6 à 8,
**caractérisé en ce que**

le chiffrement Mc d'un message en texte en clair composé de $PB_1$, $PT^{OM}_1$, $PT^{OM}_2$, AD
$M_P = PB_1 \,\|\, PT^{OM}_1 \,\|\, PT^{OM}_2 \,\|\, AD$ avec $L(PB_1) = L_E$ en fonction des deux séquences de bits implicites n'appartenant pas au message ImplAD et $Impl_u$ en utilisant un chiffrement par bloc E avec une taille de bloc $L_E = u$ est défini comme suit :

$$E^{FP,\ E-Raw,\ OM,\ OM-NB}_K(PB_1,\ PT^{OM}_1\ PT^{OM}_2,\ AD,\ ImplAD,\ Impl_u) :=$$

$$CB_1 \,\|\, E^{OM}_K(OM\text{-}NB(CB_1),\ PT^{OM}_1 \,\|\, PT^{OM}_2)$$

avec

$$CB_1 := E^{RAW}_K(FP(PB_1 \,\|\, PT^{OM}_2 \,\|\, AD \,\|\, ImplAD) \oplus Impl_u)$$

et le déchiffrement $M_P'$ d'un message en texte chiffré composé de $CB_1'$, $CT^{OM'}$, AD' $M_C' = CB_1' \,\|\, CT^{OM'} \,\|\, AD'$ avec $L(CB_1') = L_E$ en fonction de $L_{PT1}$ et des deux séquences de bits implicites ImplAD' et $Impl_u'$ n'appartenant pas au message en utilisant un chiffrement par bloc E avec une taille de bloc $L_E = u$ est défini comme suit :

$$D^{FP,\ D-Raw,\ OM,\ OM-NB}_K(CB_1',\ CT^{OM'},\ AD',\ L_{PT1},\ ImplAD',\ Impl_u') :=$$

$$FP^{-1}((D^{RAW}_K(CB_1') \oplus Impl_u') \,\|\, PT^{OM'}[L_{PT1}+1..L(PT^{OM'})] \,\|\, AD \,\|\, ImplAD') \,\|\,$$
$$PT^{OM'}$$

avec

$$PT^{OM'} := D^{OM}_K(OM\text{-}NB(CB^u_1'),\ CT^{OM'})$$

10. Procédé selon la revendication 8 ou 9,
**caractérisé en ce que**
le mode de fonctionnement CBC est utilisé comme mode d'opération OM, on renonce au remplissage des blocs situés en dehors du premier bloc et, à la place, le mode de fonctionnement CTS en combinaison avec le mode de fonctionnement CBC est appliqué.

11. Procédé selon l'une des revendications 1 à 10,
**caractérisé en ce que**
si $L(CB_1) = L_E$, le premier bloc $CB_1$ est à nouveau chiffré avant l'envoi du message Mc.

12. Procédé permettant le chiffrement d'un texte en clair avec un chiffrement par bloc E de taille de bloc $L_E$ à l'aide d'une clé symétrique K,
**caractérisé en ce que**

comme fonction d'empreinte digitale ($FP_u$) une fonction d'empreinte digitale

$$FP^{Tag\_u,\ Scramble\_u} (BF) := Scramble_u (BF[1..u]) \oplus Tag_u(BF[u + 1..L(BF)])$$

est utilisée, où $Tag_u$ est une fonction qui calcule pour des séquences de bits BF de longueur quelconque une valeur de longueur u univoque avec une probabilité suffisamment élevée pour l'application prévue, où $Scramble_u$ est une fonction réversible qui reproduit des séquences de bits (BF) de longueur u sur des séquences de bits (BF) de longueur u, et où $\oplus$ représente une combinaison XOR bit par bit de deux séquences de bits (BF) de même longueur, et dans lequel

dans le cas de la garantie de la nouveauté de la séquence de bits entrant dans la fonction $Tag_u$ de la fonction d'empreinte digitale $FP^{Tag\_u,\ Scramble\_u}$, pour chaque nouveau message une fonction de hachage sûre dépendant de la clé $HASH_{K\_H}$ est utilisée comme base pour la fonction $Tag_u{}^{K\_H}$ d'une fonction d'empreinte digitale $FP_u{}^{K\_H}$, on renonce au chiffrement supplémentaire des premiers u bits du texte en clair au moyen de EGen et, à la place, l'empreinte digitale $FP_u{}^{K\_H}$ est directement utilisé comme le chiffrement des premiers u bits $CB^u{}_1$.

**13.** Procédé selon l'une des revendications 1 à 12
   **caractérisé en ce que**
   le format du texte en clair PT est conçu de telle sorte que le premier bloc de texte en clair $PB_1$ contienne des informations aussi prévisibles que possible, obéissant notamment à des règles de cohérence fortes, présentant une redondance maximale possible, le respect de ces règles de cohérence est vérifié par le destinataire après le déchiffrement du message et un traitement d'exception est déclenché en cas de constatation de la violation de l'une des règles de cohérence.

**14.** Procédé selon l'une des revendications 1 à 13,
   **caractérisé en ce**
   **qu'**une fonction d'identité ou une fonction de chiffrement à maintien de longueur est utilisée comme fonction $Scramble_u$, et dans le cas du chiffrement, la fonction de déchiffrement correspondant au chiffrement est utilisée comme fonction d'inversion.

**15.** Procédé selon la revendication 14,
   **caractérisé en ce que**
   pour un chiffrement par bloc E avec une taille de bloc $L_E = u$ et une clé symétrique K_S de $L_E$ bits de longueur, la fonction $Scramble_u$ le chiffrement E-Raw avec K_S, c'est-à-dire $E^{RAW}{}_{K\_S}$ et utilisé.

**16.** Procédé selon l'une des revendications 14 ou 15,
   **caractérisé en ce que**
   la longueur du vecteur d'initialisation IV est adaptée en fonction du mode de fonctionnement sélectionné et/ou en fonction de la longueur de $CB_1$.

**17.** Procédé selon l'une des revendications 1 à 16,
   **caractérisé en ce que**
   le chiffrement est utilisé pour un texte en clair d'une longueur d'au moins (u+1) bits.

$$FP^{Tag\_u,\ Scramble\_u}\ und\ (FP^{Tag\_u,\ Scramble\_u})^{-1}$$

## Fig. 1

Verschlüsselung (allgemeine FP$_u$-Nutzung)

Entschlüsselung (allgemeine FP$_u^{-1}$-Nutzung)

## Fig. 2

Verschlüsselung (Nutzung $FP^{Tag\_u, Scramble\_u}$ aufgelöst)

Entschlüsselung (Nutzung $(FP^{Tag\_u, Scramble\_u})^{-1}$ aufgelöst)

**Fig. 3**

$FP^{HASH(K\_H), (E-K\_S)}$

$(FP^{HASH(K\_H), (E-K\_S)})^{-1}$

**Fig. 4**

Verschlüsselung mit Nutzung $FP^{HASH(K\_H),\,(E-K\_S)}$      Entschlüsselung mit Nutzung $(FP^{HASH(K\_H),\,(E-K\_S)})^{-1}$

## Fig. 5

Verschlüsselung mit Nutzung $FP^{HASH(K\_H),\,(E-K\_S)}$, aufgelöst    Entschlüsselung mit Nutzung $(FP^{HASH(K\_H),\,(E-K\_S)})^{-1}$, aufgelöst

## Fig. 6

**Fig. 7**

**Fig. 8**

MS-Bits                              LS-Bits

| Gesamtzähler: | RumpfZähler | ÜbertrZähler |
|---|---|---|

ÜbertrZählerLänge Bits

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019356468 A1
- US 20140013123 A1
- US 201503499950 A1
- DE 102021001095 A1
- DE 102019113026 A1
- US 20150349950 A1
- WO 2009013420 A1